(19) Europäisches Patentamt
European Patent Office
Office européen des brevets

(11) EP 3 103 822 B1

(12) **EUROPEAN PATENT SPECIFICATION**

(45) Date of publication and mention of the grant of the patent:
**06.11.2019 Bulletin 2019/45**

(21) Application number: **15742535.6**

(22) Date of filing: **02.02.2015**

(51) Int Cl.:
***C08G 18/48*** (2006.01) ***C08G 18/66*** (2006.01)
***G02B 1/04*** (2006.01) ***G02C 7/10*** (2006.01)

(86) International application number:
**PCT/JP2015/052874**

(87) International publication number:
**WO 2015/115648 (06.08.2015 Gazette 2015/31)**

(54) **POLYMERIZABLE COMPOSITION FOR OPTICAL MATERIAL, AND OPTICAL MATERIAL AND PLASTIC LENS OBTAINED FROM SAID COMPOSITION**

POLYMERISIERBARE ZUSAMMENSETZUNG FÜR EIN OPTISCHES MATERIAL SOWIE AUS DIESER ZUSAMMENSETZUNG GEWONNENES OPTISCHES MATERIAL UND KUNSTSTOFFLINSE

COMPOSITION POLYMÉRISABLE POUR MATÉRIAU OPTIQUE ET MATÉRIAU OPTIQUE ET LENTILLE EN PLASTIQUE OBTENUE À PARTIR DE LADITE COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2014 JP 2014018928**

(43) Date of publication of application:
**14.12.2016 Bulletin 2016/50**

(73) Proprietor: **Mitsui Chemicals, Inc.**
**Tokyo 105-7117 (JP)**

(72) Inventor: **KADOWAKI, Shinichiro**
**Omuta-shi**
**Fukuoka 836-8610 (JP)**

(74) Representative: **Mewburn Ellis LLP**
**City Tower**
**40 Basinghall Street**
**London EC2V 5DE (GB)**

(56) References cited:
**WO-A1-98/03890**
**WO-A1-2012/141250**
**JP-A- S6 433 154**
**JP-A- 2000 515 904**
**JP-A- 2001 512 516**
**JP-A- 2004 500 319**
**JP-A- 2006 513 276**
**JP-A- 2007 091 595**
**US-A- 4 889 413**
**US-A1- 2003 044 620**
**US-A1- 2004 096 666**
**US-A1- 2007 142 602**
**US-A1- 2009 099 329**
**US-A1- 2011 043 902**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a polymerizable composition for optical materials including a photochromic compound, and an optical material and a plastic lens obtained from the composition.

BACKGROUND ART

Since plastic lenses are light and not easily cracked in comparison to inorganic lenses, plastic lenses have been rapidly distributed as optical elements such as spectacle lenses, camera lenses. In recent years, development of plastic lenses having photochromic property has been progressing.

In addition, among these, a lens obtained from poly (thio) urethane has attracted attention from the viewpoint that the lens has a high refractive index and physical properties thereof such as strength is excellent.

Patent Document 1 describes a lens formed of a composition including a predetermined photochromic compound and a di (meth) acrylate compound. In paragraph "0009", it is described that in a case where a urethane resin or a thiourethane resin having a high refractive index is used, isocyanate which is a resin raw material in a monomer state reacts with a photochromic compound, and due to this, photochromic property is completely eliminated.

Patent Document 2 discloses a lens obtained by providing a coating layer formed of a composition including a photochromic compound having a chromene skeleton and a phenol compound on a surface of a thiourethane-based plastic lens.

Patent Document 3 discloses a photochromic lens having a lens substrate formed of a thiourethane resin and a photochromic film formed by applying a solution including a photochromic compound and a radically polymerizable monomer to the substrate. Patent Document 4 discloses a compound having photochromic properties.

Patent Document 5 discloses a polymerizable composition for optical materials including at least one kind of isocyanate compounds selected from aliphatic isocyanate compounds and alicyclic isocyanate compounds, a di- or higher functional active hydrogen compound, and a photochromic compound.

RELATED DOCUMENT

PATENT DOCUMENT

[Patent Document 1] Japanese Unexamined Patent Publication No. 8-272036
[Patent Document 2] Japanese Unexamined Patent Publication No. 2005-23238
[Patent Document 3] Japanese Unexamined Patent Publication No. 2008-30439
[Patent Document 4] Japanese Unexamined Patent Publication No. 2011-144181
[Patent Document 5] Pamphlet of International Publication No. WO2014/002844
[Patent Document 6] United States Patent No. 6506538
[Patent Document 7] Japanese Unexamined Patent Publication No. 2005-305306
[Patent Document 8] WO2005/087829
[Patent Document 9] WO2006/109765
[Patent Document 10] WO2007/020817
[Patent Document 11] WO2007/020818
[Patent Document 12] WO2014/002844

US 2004/096666A1 discusses an optical article having a solid transparent substrate and a transparent thermoplastic polyurethane film. In particular, US 2004/096666A1 disclose compositions with poly(tetramethylene ether) glycol (PTMG). PTMG is not within the scope of the components required by the present invention.

US 4 889 413 A discusses a process for producing a polyurethane plastics having photochromic properties. In particular, US 4 889 413 A discloses a composition with trimethylol propane (TMP). TMP is not within the scope of the components required by the present invention.

US 2009/099329 A1 discusses a polythiourethane-based resin obtained by reacting an alicyclic isocyanate compound, a polythiol compound optionally having a (poly)sulfide bond in a molecule and a diol compound or mercapto alcohol compound. Tinting of the composition is discussed as one of many possible additional additives. D3 does not disclose the photochromic compounds of the present invention.

WO 98/03890 A1 discusses a stabilizing matrix for photochromic compounds in which a functionalized hindered

amine light stabilizer capable of reacting with an isocyanate group is linked to the polymer backbone by a covalent bond to form a grafted structure. The resulting matrix is characterized by having a stabilizing effect on the photochromic dye. WO 98/03890 A1 discloses a composition with tetramethyl piperidinol. Tetramethyl piperidinol is not within the scope of the components required by the present invention.

US 2011/043902 A1 discusses an optical article comprising a laminated substance in which a plastic sheet, a resin layer and a backup resin are laminated in this order, wherein the resin layer containing an electromagnetic wave absorbing agent. US 2011/043902 A1 discloses a composition with 'rush yellow'. Rush Yellow is not within the scope of the photochromic compounds of the present invention.

US 2003/044620 A1 discusses articles of a non-elastomeric poly(ureaurethane) substrate having free isocyanato surface groups and at least a partial coating of a photochromic polymeric coating on at least one surface of the substrate. US 2003/044620 A1 discloses compositions with poly(tetramethylene ether) glycol (PTMG). PTMG is not within the scope of the components required by the present invention.

US 2007/142602A1 discusses polyurethanes and sulfur-containing polyurethanes, and methods for their preparation. US 2007/142602A1 discloses a composition with trimethylol propane (TMP). TMP is not within the scope of the components required by the present invention.

SUMMARY OF THE INVENTION

Even in a case where an optical material having photochromic property formed of poly (thio) urethane is obtained, there is a problem that the photochromic compound reacts with isocyanate which is a monomer, and due to this, photochromic property is not exhibited at all, as described in paragraph "0009" of Patent Document 1.

In addition, Patent Document 5 describes that, according to a poly (thio) urethane-based composition for optical materials obtained by using a specific polyisocyanate compound, photochromic property is imparted to the obtained optical material. However, there is room for further improvement in applications with the main purpose of light shielding, such as sunglasses, from the viewpoint of the amount of changes in light transmittance.

The present invention can be described as follows.

[1] A polymerizable composition for optical materials, comprising:

a polyisocyanate compound (A),
a polyol compound (B) represented by the following General Formula (1) having a number average molecular weight of 100 or more,
a di- or higher functional active hydrogen compound (C) in which the compound (B) is excluded and
a photochromic compound (D),

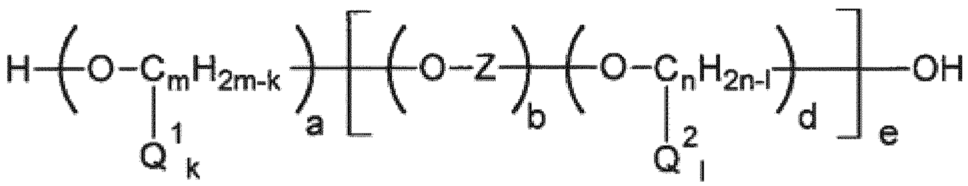

(1)

wherein, in Formula (1), m represents a numerical value of 1 to 20, k represents 0 to 2m, n represents a numerical value of 1 to 20, l represents 0 to 2n, a represents a numerical value of 0 or more, b represents a numerical value of 0 or more, d represents a numerical value of 0 or more, and e represents a numerical value of 1 or more; $Q^1$ represents a hydrogen atom or an alkyl group having 1 to 6 carbon atoms, and a plurality of $Q^1$'s may be the same as or different from each other; $Q^2$ represents a hydrogen atom or an alkyl group having 1 to 6 carbon atoms, and a plurality of $Q^2$'s may be the same as or different from each other; and Z represents a divalent organic group having 1 to 30 carbon atoms which optionally include an aromatic group, and a plurality of Z's may be the same as or different from each other.
The polyisocyanate compound (A) is at least one kind selected from the group consisting of hexamethylene diisocyanate, pentamethylene diisocyanate, xylylene diisocyanate, isophorone diisocyanate, bis(isocyanatomethyl) cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and diphenylmethane diisocyanate.
The polyol compound (B) is at least one kind selected from compounds which have a number average molecular weight of 100 or more and which are represented by the following General Formulas (I) to (IV),

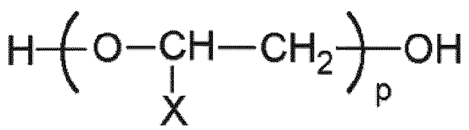

(I)

wherein, in Formula (I), p represents a numerical value of 4 to 100, X represents a hydrogen atom or a methyl group, and a plurality of X's may be the same as or different from each other,

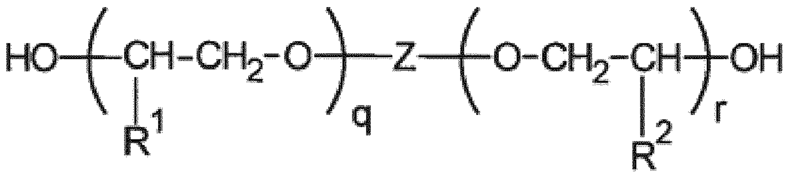

(II)

wherein, in Formula (II), q and r may be the same as or different from each other, each of q and r represents a numerical value of 1 or more, and the sum of q and r represents a numerical value of 2 to 100; $R^1$ and $R^2$ may be the same as or different from each other, each of $R^1$ and $R^2$ represents a hydrogen atom or a methyl group, and a plurality of $R^1$' s or $R^2$'s may be the same as or different from each other; and Z represents a substituted or unsubstituted divalent aromatic group or a divalent aliphatic group which optionally include a substituted or unsubstituted aromatic group having 1 to 20 carbon atoms,

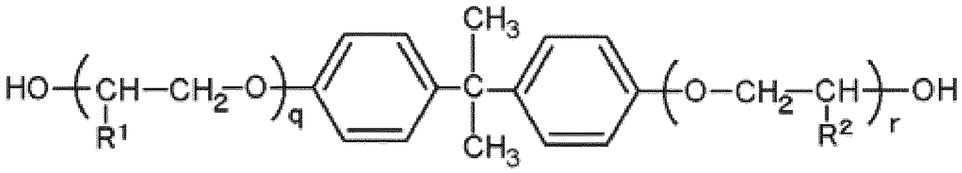

(III)

wherein, in Formula (III), q and r may be the same as or different from each other, each of q and r represents a numerical value of 1 or more, and the sum of q and r represents a numerical value of 2 to 100; and $R^1$ and $R^2$ may be the same as or different from each other, each of $R^1$ and $R^2$ represents a hydrogen atom or a methyl group, and a plurality of $R^1$'s or $R^2$'s may be the same as or different from each other,

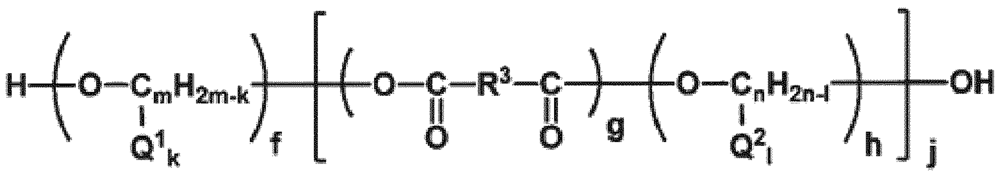

(IV)

wherein, in Formula (IV), m represents a numerical value of 1 to 20, k represents 0 to 2m, n represents a numerical value of 1 to 20, l represents 0 to 2n, f represents a numerical value of 0 or more, g represents a numerical value of 1 or more, h represents a numerical value of 1 or more, and j represents a numerical value of 1 or more; $Q^1$ represents a hydrogen atom or an alkyl group having 1 to 6 carbon atoms, and a plurality of $Q^1$'s may be the same as or different from each other; $Q^2$ represents a hydrogen atom or an alkyl group having 1 to 6 carbon atoms, and a plurality of $Q^2$'s may be the same as or different from each other; and $R^3$ represents a linear or branched alkylene group having 1 to 20 carbon atoms or a phenylene group which optionally have a linear or branched alkyl group having 1 to 10 carbon atoms as a substituent, and the plurality of $R^3$'s may be the same as or different from each other.

The active hydrogen compound (C) is at least one kind selected from the group consisting of glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).

The photochromic compound (D) is represented by the following General Formula (5),

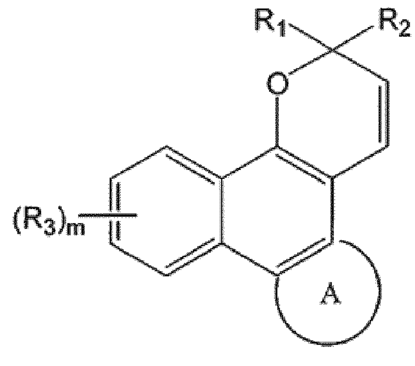

(5)

wherein in the formula, $R_1$ and $R_2$ may be identical or different, and independently represent
a hydrogen atom;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms in which these substituted groups , as a substituent, include at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms that is substituted by at least one halogen atom, a linear or branched haloalkoxy group having 1 to 12 carbon atoms that is substituted by at least one halogen atom, a phenoxy group or naphthoxy group substituted by at least one linear or branched alkyl group or alkoxy group having 1 to 12 carbon atoms, a linear or branched alkenyl group having 2 to 12 carbon atoms, a $-NH_2$ group, a -NHR group, a $-N(R)_2$ group in which R represents a linear or branched alkyl group having 1 to 6 carbon atoms, in which in a case that two Rs are present, the two Rs may be identical or different, a methacryloyl group and an acryloyl group; or
an aralkyl or heteroaralkyl group that a linear or branched alkyl group having 1 to 4 carbon atoms is substituted by the aryl group or the heteroaryl group,
$R_3$ may be identical or different, and independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms that is substituted by at least one halogen atom, a halocycloalkyl group having 3 to 12 carbon atoms that is substituted by at least one halogen atom, a linear or branched haloalkoxy group having 1 to 12 carbon atoms that is substituted by at least one halogen atom;
a substituted or unsubstituted aryl group having 6 to 24 carbon atoms or a substituted or unsubstituted heteroaryl group having 4 to 24 carbon atoms in which these substituted groups , as a substituent, include at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms that is substituted by at least one halogen atom, a linear or branched haloalkoxy group having 1 to 12 carbon atoms that is substituted by at least one halogen atom, a phenoxy group or naphthoxy group substituted by at least one linear or branched alkyl group or alkoxy group having 1 to 12 carbon atoms, a linear or branched alkenyl group having 2 to 12 carbon atoms, and an amino group;
an aralkyl or heteroaralkyl group that a linear or branched alkyl group having 1 to 4 carbon atoms is substituted by the aryl group or heteroaryl group;
a substituted or unsubstituted phenoxy group or naphthoxy group, in which these substituted groups, as a substituent, include at least one substituent selected from a linear or branched alkyl group or alkoxy group having 1 to 6 carbon atoms;
$-NH_2$, -NHR, $-CONH_2$, or -CONHR in which R represents a linear or branched alkyl group having 1 to 6 carbon atoms; or
$-OCOR_8$ or $-COOR_8$ in which $R_8$ represents a linear or branched alkyl group having 1 to 6 carbon atoms, a cycloalkyl group having 3 to 6 carbon atoms, or a phenyl group substituted by at least one substituents of the substituted aryl and the substituted heteroaryl group of $R_1$ or $R_2$, or an unsubstituted phenyl group;
m is an integer of 0 to 4;

A represents an annelated ring represented by the following Formula ($A_2$) or ($A_4$), and

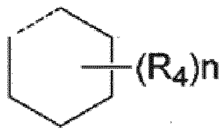

($A_2$)

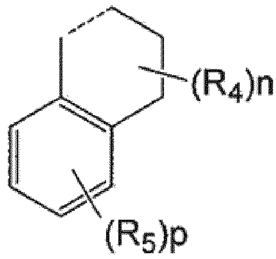

($A_4$)

wherein, in these annelated rings,

the dotted lines represent a chemical bond between a carbon $C_5$ and a carbon $C_6$ in a naphthopyran ring of a formula (5); an $\alpha$ bond in the annelated ring (A4) can be bonded with the carbon $C_5$ or the carbon $C_6$ in the naphthopyran ring of Formula (5);
$R_4$ is identical or different, and independently represents OH, a linear or branched alkyl group or alkoxy group having 1 to 6 carbon atoms; two $R_4$s form carbonyl (CO);
$R_5$ represents halogen atom;
a linear or branched alkyl group having 1 to 12 carbon atoms;
a linear or branched haloalkyl group having 1 to 6 carbon atoms that is substituted by at least one halogen atom;
a cycloalkyl group having 3 to 12 carbon atoms;
a linear or branched alkoxy group having 1 to 6 carbon atoms;
a substituted or unsubstituted phenyl or benzyl group in which these substituted groups include at least one substituents described in the definition of the $R_1$ and $R_2$ groups as a substituent in a case that $R_1$ and $R_2$ in Formula (5) independently correspond to an aryl or heteroaryl group;
$-NH_2$ or -NHR in which R represents a linear or branched alkyl group having 1 to 6 carbon atoms;
a substituted or unsubstituted phenoxy group or naphthoxy group in which these substituted groups, as a substituent, include at least one substituent selected from a linear or branched alkyl group or alkoxy group having 1 to 6 carbon atoms; or
a $-COR_9$, $-COOR_9$, or $-CONHR_9$ group in which $R_9$ represents a linear or branched alkyl group having 1 to 6 carbon atoms, a cycloalkyl group having 3 to 6 carbon atoms, or a substituted or unsubstituted phenyl or benzyl group in which these substituted groups include at least one substituents described in the definition of the $R_1$ and $R_2$ groups as a substituent in a case that $R_1$ and $R_2$ in Formula (5) independently correspond to an aryl or heteroaryl group,
in a case in which A represents ($A_4$), n is an integer of 0 to 2, p is an integer of 0 to 4, and in a case in which A represents ($A_2$), n is an integer of 0 to 2.

[2] The polymerizable composition for optical materials according to [1] ,
wherein the polyol compound (B) is the compound represented by General Formula (I), (III), or (IV).
[3] The polymerizable composition for optical materials according to [1] or [2]
wherein the compound represented by General Formula (I) is polyethylene glycol or polypropylene glycol.
[4] The polymerizable composition for optical materials according to any one of [1] to [3]
wherein the number average molecular weight of the compound represented by General Formula (I) is 200 to 4000.
[5] The polymerizable composition for optical materials according to any one of [1] to [3]
wherein the number average molecular weight of the compound represented by General Formula (I) is 300 to 3000.
[6] The polymerizable composition for optical materials according to [any one of [1] to [5]
wherein the number average molecular weight of the compound represented by General Formula (II) is 400 to 2000.
[7] The polymerizable composition for optical materials according to [1]to [6].
wherein the number average molecular weight of the compound represented by General Formula (III) is 400 to 2000.
[8] The polymerizable composition for optical materials according to [1] to [7]
wherein the number average molecular weight of the compound represented by General Formula (IV) is 600 to 3000.
[9] The polymerizable composition for optical materials according to any one of [1] to [8].
wherein the functional group equivalent ratio (B/A) of the polyol compound (B) to the polyisocyanate compound (A) is 0.02 to 0.6, and the functional group equivalent ratio (C/A) of the active hydrogen compound (C) to the polyisocyanate compound (A) is 0.4 to 0.98.

[10] A molded product comprised of a cured product of the polymerizable composition for optical materials according to any one of [1] to [9] .

[11] An optical material comprised of the molded product according to [10].

[12] A plastic lens comprised of the molded product according to [10].

[13] A process for producing a plastic lens, comprising:

a step of preparing a polymerizable composition for optical materials by mixing a polyisocyanate compound (A), a polyol compound (B) represented by the following General Formula (1) having a number average molecular weight of 100 or more, a di- or higher functional active hydrogen compound (C) in which the compound (B) is excluded, and a photochromic compound (D) and

a step of forming a lens substrate by cast-polymerizing the polymerizable composition for optical materials in a mold,

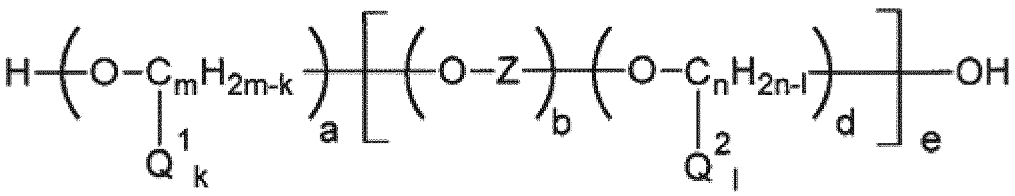

(1)

wherein, in Formula (1), m represents a numerical value of 1 to 20, k represents 0 to 2m, n represents a numerical value of 1 to 20, l represents 0 to 2n, a represents a numerical value of 0 or more, b represents a numerical value of 0 or more, d represents a numerical value of 0 or more, and e represents a numerical value of 1 or more; $Q^1$ represents a hydrogen atom or an alkyl group having 1 to 6 carbon atoms, and a plurality of $Q^1$'s may be the same as or different from each other; $Q^2$ represents a hydrogen atom or an alkyl group having 1 to 6 carbon atoms, and a plurality of $Q^2$'s may be the same as or different from each other; and Z represents a divalent organic group having 1 to 30 carbon atoms which optionally include an aromatic group, and a plurality of Z's may be the same as or different from each other.

According to the polymerizable composition for optical materials of the present invention, it is possible to obtain a polyurethane-based optical material or a polythiourethane-based optical material including a photochromic compound, which exhibits excellent photochromic property without causing deterioration in property of the photochromic compound, and is also excellent in physical properties such as mechanical strength.

DESCRIPTION OF EMBODIMENTS

The polymerizable composition for optical materials of the present invention will be described based on the following embodiment.

The polymerizable composition for optical materials of the present embodiment includes
a polyisocyanate compound (A),
a polyol compound (B) represented by the following General Formula (1) having a number average molecular weight of 100 or more,
a di- or higher functional active hydrogen compound (C) (here, the compound (B) is excluded), and
a photochromic compound (D).

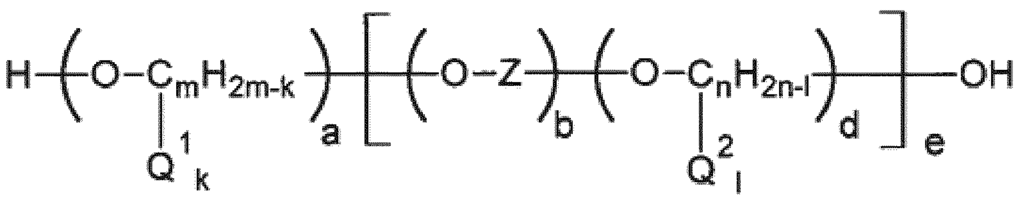

(1)

In Formula (1), m represents a numerical value of 1 to 20, k represents 0 to 2m, n represents a numerical value of 1 to 20, l represents 0 to 2n, a represents a numerical value of 0 or more, b represents a numerical value of 0 or more, d represents a numerical value of 0 or more, and e represents a numerical value of 1 or more; $Q^1$ represents a hydrogen

atom or an alkyl group having 1 to 6 carbon atoms, and a plurality of $Q^{1}$'s may be the same as or different from each other; $Q^2$ represents a hydrogen atom or an alkyl group having 1 to 6 carbon atoms, and a plurality of $Q^{2}$'s may be the same as or different from each other; and Z represents a divalent organic group having 1 to 30 carbon atoms which optionally include an aromatic group, and a plurality of Z's may be the same as or different from each other.

It is considered that the polymerizable composition for optical materials of the present embodiment effectively suppresses the failure of an isomerization reaction of the photochromic compound (D) in the polymer matrix of the composition by including the compounds (A) to (C) in the configuration thereof. That is, it is thought that, by adding the compound (B) which is an essential component of the present invention to a resin in the related art, used in lenses for spectacles or the like formed of the compounds (A) and (C), an appropriate space where an isomerization reaction of the photochromic compound is likely to occur is formed in the matrix molecular chain, and as a result, good photochromic property is achieved. In addition, with this configuration, high photochromic property can be exhibited, and excellent mechanical properties which are the features of a poly(thio)urethane-based resin can be exhibited. That is, the present invention can provide an optical material which is excellent in terms of balance of these properties.

Hereinafter, each component will be described.

[Polyisocyanate Compound (A)]

The polyisocyanate compound (A) is at least one selected from hexamethylene diisocyanate, pentamethylene diisocyanate, xylylene diisocyanate, isophorone diisocyanate, bis(isocyanatomethyl) cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, or diphenylmethane diisocyanate. Preferably (A) is selected from m-xylylene diisocyanate, bis(isocyanatomethyl) cyclohexane, dicyclohexylmethane diisocyanate, 2,5-bis(isocyanatomethyl)bicyclo-[2.2.1]-heptane, or 2,6-bis(isocyanatomethyl)bicyclo-[2.2.1]-heptane

These polyisocyanate compounds may be used alone or used as a mixture of two or more kinds thereof.

[Polyol Compound (B)]

To impart good color-developing property to the polymer (molded product) obtained from the polymerizable composition of the present embodiment, it is necessary to set the molecular weight of the polyol compound (B) to be added to a suitable range.

The polyol compound (B) is at least one kind of compounds selected from the compounds represented by each of General Formulas (I) to (IV)

(Compound Represented by General Formula (I))

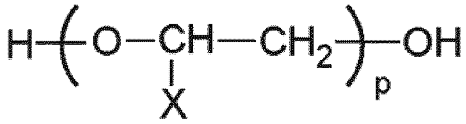

(I)

In Formula (I), p represents a numerical value of 4 to 100, and preferably a numerical value of 15 to 50. X represents a hydrogen atom or a methyl group, and a plurality of X's may be the same as or different from each other. X is preferably a methyl group.

Examples of the compound represented by General Formula (I) include polyethylene glycol and polypropylene glycol. These may include a low molecular oligomer such as ethylene glycol, diethylene glycol, or triethylene glycol, and may be used alone or used as a mixture of two or more kinds thereof.

The lower limit of the number average molecular weight of the compound represented by General Formula (I) is 100 or more, preferably 200 or more, more preferably 300 or more, and still more preferably 400 or more, and the upper limit thereof is 4000 or less, preferably 3000 or less, and more preferably 2000 or less. The upper limit and the lower limit can be suitably combined.

In a case where the number average molecular weight of the compound represented by General Formula (I) is within the above range, it is possible to effectively exhibit photochromic property without impairing characteristics such as high mechanical strength of a poly(thio)urethane resin.

For example, in a case where the compound represented by General Formula (I) is polyethylene glycol, when the number average molecular weight is less than 400, improvement of the color-developing property is not sufficiently

obtained in some cases, and when the number average molecular weight is greater than 2000, the polymer becomes clouded, in some cases.

In a case where the compound represented by General Formula (I) is polypropylene glycol, when the number average molecular weight is less than 400, improvement of the color-developing property is not sufficiently obtained in some cases, and when the number average molecular weight is greater than 1000, the polymer becomes clouded, in some cases.

In addition, the obtained polymer in the case of polypropylene glycol exhibits higher heat resistance and rigidity than that in the case of polyethylene glycol. Accordingly, in applications used in various environments or conditions, such as lenses for spectacles, polypropylene glycol is more preferable than polyethylene glycol in some cases.

(Compound Represented by General Formula (II))

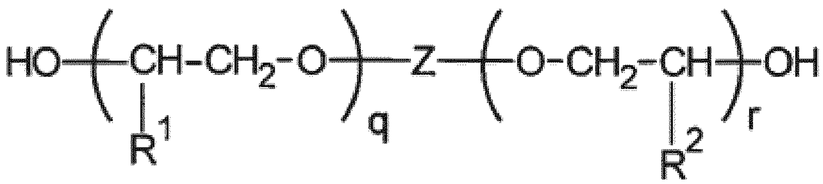

(II)

In Formula (II), q and r may be the same as or different from each other, each of q and r represents a numerical value of 1 or more, and preferably a numerical value of 6 to 25. q and r take numerical values such that the sum of q and r satisfies a numerical value of 2 to 100, and preferably a numerical value of 12 to 50.

$R^1$ and $R^2$ may be the same as or different from each other, each of $R^1$ and $R^2$ represents a hydrogen atom or a methyl group, and a plurality of $R^1$'s or $R^2$'s may be the same as or different from each other.

Z represents a substituted or unsubstituted divalent aromatic group or a divalent aliphatic group which optionally include a substituted or unsubstituted aromatic group having 1 to 20 carbon atoms. Moreover, Z does not include $-Ph-C(CH_3)_2-Ph-$ (Ph: phenylene group) .

Examples of the substituted or unsubstituted divalent aromatic group include a phenylene group, a naphthylene group, an anthracene group, a diphenylmethane group, a 1,1-diphenylethane group, a 1,1,1-methyldiphenylethane group, a 1,3-diphenylpropane group, a 1,2-diphenylpropane group, a diphenylether group, a diphenylsulfide group, a diphenylsulfoxide group, a diphenylsulfone group, a diphenylketone group, a phenylbenzoate group, a biphenyl group, a stilbene group, a diazobenzene group, an aniline benzylidene group, and derivatives thereof.

Examples of the divalent aliphatic group which optionally include a substituted or unsubstituted aromatic group having 1 to 20 carbon atoms include divalent groups derived from a substituted or unsubstituted alkylene group having 1 to 20 carbon atoms and a bisalkoxy aromatic compound having 1 to 20 carbon atoms.

Examples of the substituted or unsubstituted alkylene group having 1 to 20 carbon atoms include a butylene group, a pentylene group, and a nonylene group.

Examples of the bisalkoxy aromatic compound having 1 to 20 carbon atoms include 1,4-bis(hydroxyethoxy) benzene, (1,3-bis (m-hydroxyethoxy) benzene, and 2,2-[(1,1-biphenyl)-4,4-diylbis(oxy)] bisethanol.

Examples of the substituent of a divalent aromatic group or a divalent aliphatic group include an alkyl group having 1 to 10 carbon atoms and an alkoxy group having 1 to 10 carbon atoms.

In the present embodiment, Z is preferably a phenylene group, a naphthylene group, or a biphenylene group.

Examples of the compound represented by General Formula (II) include polyethylene glycol adducts or polypropylene glycol adducts such as 1,4-butanediol, 3-methyl-1,5-pentanediol, 1,9-nonanediol, 1,4-bis(hydroxyethoxy) benzene, 1,3-bis(m-hydroxyethoxy) benzene, and 2,2[(1,1-biphenyl)-4,4-diylbis (oxy)] bisethanol, and these may be used alone or used as a mixture of two or more kinds thereof.

Moreover, the compound represented by General Formula (II) does not include the compound represented by General Formula (III).

The lower limit of the number average molecular weight of the compound represented by General Formula (II) is 200 or more, preferably 300 or more, more preferably 400 or more, and still more preferably 500 or more, and the upper limit thereof is 4000 or less, preferably 3000 or less, more preferably 2000 or less, and still more preferably 1000 or less. The upper limit and the lower limit can be suitably combined.

In a case where the number average molecular weight of the compound represented by General Formula (II) is within the above range, it is possible to effectively exhibit photochromic property without impairing characteristics such as high mechanical strength of a poly(thio)urethane resin.

(Compound Represented by General Formula (III))

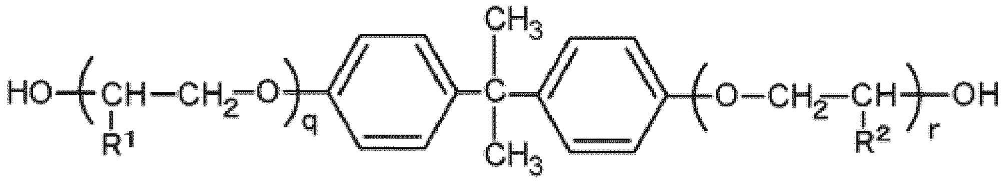

(III)

In Formula (III), q and r may be the same as or different from each other, each of q and r represents a numerical value of 1 or more, and preferably a numerical value of 6 to 25. q and r take numerical values such that the sum of q and r satisfies a numerical value of 2 to 100, and preferably a numerical value of 12 to 50.

$R^1$ and $R^2$ may be the same as or different from each other, each of $R^1$ and $R^2$ represents a hydrogen atom or a methyl group, and a plurality of $R^1$'s or $R^2$'s may be the same as or different from each other.

Examples of the compound represented by General Formula (III) include polyethylene glycol adducts of bisphenol A and polypropylene glycol adducts of bisphenol A, and these may be used alone or used as a mixture of two or more kinds thereof.

The lower limit of the number average molecular weight of the compound represented by General Formula (III) is 200 or more, preferably 300 or more, more preferably 400 or more, and still more preferably 500 or more, and the upper limit thereof is 4000 or less, preferably 3000 or less, more preferably 2000 or less, and still more preferably 1500 or less. The upper limit and the lower limit can be suitably combined.

In a case where the number average molecular weight of the compound represented by General Formula (III) is within the above range, it is possible to effectively exhibit photochromic property without impairing characteristics such as high mechanical strength of a poly(thio)urethane resin.

For example, in a case where the compound represented by General Formula (III) is a polyethylene glycol adduct of bisphenol A or a polypropylene glycol adduct of bisphenol A, when the number average molecular weight is less than 400, improvement of the color-developing property is not sufficiently obtained in some cases, and when the number average molecular weight is greater than 1000, the polymer becomes clouded, in some cases.

(Compound Represented by General Formula (IV))

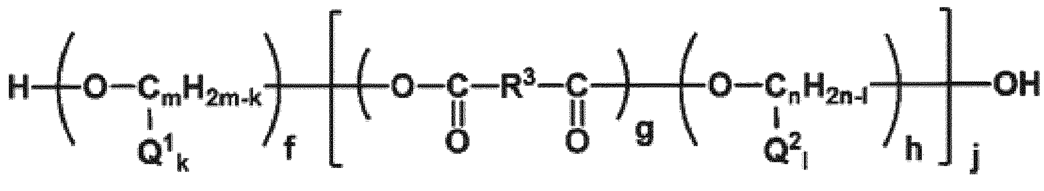

(IV)

In Formula (IV), m represents a numerical value of 1 to 20, preferably a numerical value of 1 to 10, and more preferably a numerical value of 2 to 5.

n represents a numerical value of 1 to 20, preferably a numerical value of 1 to 10, and more preferably a numerical value of 2 to 5.

f represents a numerical value of 0 or more, preferably a numerical value of 0 to 100, and more preferably a numerical value of 0 to 25.

g represents a numerical value of 1 or more, preferably a numerical value of 1 to 200, and more preferably a numerical value of 1 to 100.

h represents a numerical value of 1 or more, preferably a numerical value of 1 to 200, and more preferably a numerical value of 1 to 100.

j represents a numerical value of 1 or more, preferably a numerical value of 1 to 200, and more preferably a numerical value of 1 to 100.

k represents 0 to 2m, and l represents 0 to 2n.

$Q^1$ represents a hydrogen atom or an alkyl group having 1 to 6 carbon atoms, and preferably a hydrogen atom or an alkyl group having 1 to 3 carbon atoms . A plurality of $Q^1$'s may be the same as or different from each other.

$Q^2$ represents a hydrogen atom or an alkyl group having 1 to 6 carbon atoms, and preferably a hydrogen atom or an alkyl group having 1 to 3 carbon atoms . A plurality of $Q^2$'s may be the same as or different from each other.
$R^3$ represents a linear or branched alkylene group having 1 to 20 carbon atoms or a phenylene group which optionally have a linear or branched alkyl group having 1 to 10 carbon atoms as a substituent. A plurality of $R^3$'s may be the same as or different from each other.

Examples of the compound represented by General Formula (IV) include a polyether compound formed of a diol compound and a dicarboxylic acid.
Although the diol compound configuring the polyester compound is not particularly limited, an aliphatic diol having 2 to 12 carbon atoms in the main chain is suitably used, and examples thereof include ethylene glycol, propylene glycol, 1,4-butanediol, 3-methyl-1,5-pentanediol, and 1,9-nonanediol.
In addition, although dicarboxylic acid configuring the polyester compound is not particularly limited, an aliphatic dicarboxylic acid or an aromatic dicarboxylic acid having 2 to 12 carbon atoms in the main chain is suitably used, and examples thereof include succinic acid, adipic acid, sebacic acid, isophthalic acid, and terephthalic acid.
The polyester compound can be formed by using one kind or two or more kinds of diol compounds and one kind or two or more kinds of dicarboxylic acids in suitable combination.
In addition, a polyester compound obtained by ring-opening polymerization of lactone can also be used in the present invention. Examples of the lactone compound include $\alpha$-acetolactone, $\beta$-propiolactone, $\gamma$-butyrolactone, and $\delta$-valerolactone.
The lower limit of the number average molecular weight of the compound represented by General Formula (IV) is 600 or more, preferably 800 or more, more preferably 1000 or more, and the upper limit thereof is 4000 or less, preferably 3000 or less, and more preferably 2000 or less. The upper limit and the lower limit can be suitably combined.
In a case where the number average molecular weight of the compound represented by General Formula (IV) is within the above range, it is possible to effectively exhibit photochromic property without impairing characteristics such as high mechanical strength of a poly(thio)urethane resin.
For example, in a case where the compound represented by General Formula (IV) is a polyester compound obtained by reacting an equimolar mixture of adipic acid and isophthalic acid with 3-methyl-1,5-pentanediol in equimolar ratio, when the number average molecular weight is less than 1000, improvement of the color-developing property is not sufficiently obtained in some cases, and when the number average molecular weight is greater than 2000, the polymer becomes clouded, in some cases.
By using the polyol compound (B) formed of the compound as described above, it is possible to effectively exhibit photochromic property.
The polyol compond (B) is at least one kind of compounds selected from the compounds represented by General Formulas (I) to (IV) can be used, and from the viewpoint of the above-described effect, the compound represented by General Formula (I), (III), or (IV) can be preferably used.
In the present embodiment, the polyol compound (B) can be used within a range of 0.3 times by weight to 6 times by weight with respect to the weight of the di- or higher functional active hydrogen compound (C). In the present embodiment, the polyol compound (B) is used within the above range such that resin property required depending on the application is obtained while maintaining high photochromic property. The preferable range is 0.7 times by weight to 5 times by weight.
In a case where the times by weight of the polyol compound (B) to the active hydrogen compound (C) is within the above range, high photochromic property, that is, high color forming density and fast changes in density can be suitably exhibited. Furthermore, since the crosslinking density is within an optimal range, an optical material excellent in rigidity, surface hardness, heat resistance, and the like can be obtained.

[Di- or Higher Functional Active Hydrogen Compound (C)]

The di- or higher functional active hydrogen compound (C) (hereinafter, simply referred to as "active hydrogen compound (C)") is
at least one kind selected from glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate)
In addition, examples of the preferable combination of the polyol compound (B) and the active hydrogen compound (C) include a combination of polyethylene glycol and at least one kind selected from glycerin, pentaerythritol tetrakis(2-mercaptoacetate), and 4-mercaptomethyl-1,8-dimercapto-3,6-dithiaoctane, a combination of polypropylene glycol and at least one kind selected from pentaerythritol tetrakis(2-mercaptoacetate) and 4-mercaptomethyl-1,8-dimercapto-3,6-dithiaoctane, a combination of a polypropylene glycol adduct of bisphenol A and 4-mercaptomethyl-1,8-dimercapto-3,6-dithiaoctane, and a combination of at least one kind selected from polyester compounds formed of 3-methyl-1,5-pentanediol, adipic acid, or isophthalic acid and 4-mercaptomethyl-1,8-dimercapto-3,6-dithiaoctane, but the present invention is not limited to these combinations.

[Photochromic Compound (D)]

Disclosed herein are compounds known in the related art which can be used for photochromic lenses and used. For example, spiropyran-based compound, a spirooxazine-based compound, a fulgide-based compound, a naphthopyran-based compound, and a bisimidazole compound can be used depending on the desired color.

Examples of the spiropyran-based compound include each substitute obtained by substituting the indole ring or the benzene ring of indolinospirobenzopyran with a halogen atom, a methyl group, an ethyl group, a methylene group, an ethylene group, or a hydroxyl group, each substitute obtained by substituting the indole ring or the naphthalene ring of indolinospironaphthopyran with a halogen atom, a methyl group, an ethyl group, a methylene group, an ethylene group, or a hydroxyl group, each substitute obtained by substituting the indole ring of indolinospiroquinolinopyran with a halogen atom, a methyl group, an ethyl group, a methylene group, an ethylene group, or a hydroxyl group, and each substitute obtained by substituting the indole ring of indolinospiropyridopyran with a halogen atom, a methyl group, an ethyl group, a methylene group, an ethylene group, or a hydroxyl group.

Examples of the spirooxazine-based compound include each substitute obtained by substituting the indole ring or the benzene ring of indolinospirobenzoxazine with a halogen atom, a methyl group, an ethyl group, a methylene group, an ethylene group, or a hydroxyl group, each substitute obtained by substituting the indole ring or the naphthalene ring of indolinospironaphthoxazine with a halogen atom, a methyl group, an ethyl group, a methylene group, an ethylene group, or a hydroxyl group, each substitute obtained by substituting the indole ring of indolinospirophenanthroxazine with a halogen atom, a methyl group, an ethyl group, a methylene group, an ethylene group, or a hydroxyl group, each substitute obtained by substituting the indole ring of indolinospiroquinolinoxazine with a halogen atom, a methyl group, an ethyl group, a methylene group, an ethylene group, or a hydroxyl group, and each substitute obtained by substituting the piperidine ring and the naphthalene ring of piperidinospironaphthoxazine with a halogen atom, a methyl group, an ethyl group, a methylene group, an ethylene group, or a hydroxyl group.

Examples of the fulgide-based compound include N-cyanomethyl-6,7-dihydro-4-methyl-2-phenylspiro(5,6-benzo[b]thi ophenedicarboximide-7,2'-tricyclo[3.3.1.1$^{3,7}$]decane], N-cyanomethyl-6,7-dihydro-2-(p-methoxyphenyl)-4-methylspiro(5,6-benzo[b]thiophene-dicarboximide-7,2'-tricyclo[3.3.1.1$^{3,7}$]decane), 6,7-dihydro-N-methoxycarbonylmethyl-4-methyl-2-phenylspiro(5,6-b enzo[b]thiophene-dicarboximide-7,2'-tricyclo[3.3.1.1$^{3,7}$]decane), 6,7-dihydro-4-methyl -2-(p-methylphenyl)-N-nitromethylspiro(5,6-benzo[b]thiophenedica rboximide-7,2'-tricyclo[3.3.1.1$^{3,7}$]decane), N-cyanomethyl-6,7-dihydro-4-cyclopropyl-3-methylspiro(5,6-benzo[ b]thiophenedicarboximide-7,2'-tricyclo[3.3.1.1$^{3,7}$]decane), N-cyanomethyl-6,7-dihydro-4-cyclopropylspiro(5,6-benzo[b]thiophe nedicarboximide-7,2'-tricyclo[3.3.1.1$^{3,7}$]decane), and N-cyanomethyl-6,7-dihydro-2-(p-methoxyphenyl)-4-cyclopropylspiro (5,6-benzo[b]thiophenedicarboximide-7,2'-tricyclo[3.3.1.1$^{3,7}$]deca ne) .

Disclosed herein are examples of naphthopyran-based compound include spiro[norbornane-2,2'-[2H]benzo[h]chromene], spiro[bicyclo[3.3.1]nonane-9,2'-[2H]benzo[h]chromene], 7'-methoxyspiro[bicyclo[3.3.1]nonane-9,2'-[2H]benzo[h]chromene], 7'-methoxyspiro[norbornane-2,2'-[2H]benzo[f]chromene], 2,2-dimethyl-7-octoxy[2H]benzo[h]chromene, spiro[2-bicyclo[3.3.1]nonene-9,2'-[2H]benzo[h]chromene], spiro[2-bicyclo[3.3.1]nonene-9,2'-[2H]benzo[f]chromene], 6-morpholino-3,3-bis(3-fluoro-4-methoxyphenyl)-3H-benzo (f)chromene, 5-isopropyl-2,2-diphenyl-2H-benzo (h)chromene, the compound represented by the following General Formula (3), and the compound represented by the following General Formula (4).

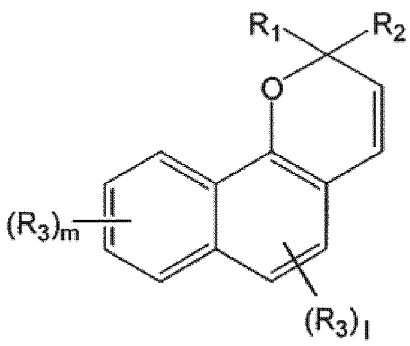

(3)

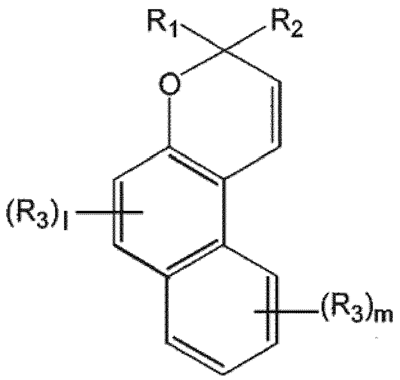

(4)

As disclosed herein, in General Formulas (3) and (4), $R_1$ and $R_2$ may be the same as or different from each other, and each of $R_1$ and $R_2$ independently represents a hydrogen atom;
a linear or branched alkyl group having 1 to 12 carbon atoms;
a cycloalkyl group having 3 to 12 carbon atoms;
an aryl group having 6 to 24 carbon atoms or a heteroaryl group having 4 to 24 carbon atoms which is substituted or unsubstituted; or
an aralkyl or heteroaralkyl group (a linear or branched alkyl group having 1 to 4 carbon atoms is substituted with an aryl group or a heteroaryl group).

The substituent of a substituted aryl group having 6 to 24 carbon atoms or a substituted heteroaryl group having 4 to 24 carbon atoms is at least one selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, and an $-NH_2$ group, an -NHR group, or a $-N(R)_2$ group (R is a linear or branched alkyl group having 1 to 6 carbon atoms, and in a case where two Rs are present, the two Rs may be the same as or different from each other), and a methacryloyl group or an acryloyl group.

$R_3$'s may be the same as or different from each other, and each $R^3$'s independently represents a halogen atom;
a linear or branched alkyl group having 1 to 12 carbon atoms; a cycloalkyl group having 3 to 12 carbon atoms;
a linear or branched alkoxy group having 1 to 12 carbon atoms;
a linear or branched haloalkyl group having 1 to 12 carbon atoms which is substituted with at least one halogen atom, a halocycloalkyl group having 3 to 12 carbon atoms which is substituted with at least one halogen atom, a linear or branched haloalkoxy group having 1 to 12 carbon atoms which is substituted with at least one halogen atom;
an aryl group having 6 to 24 carbon atoms or a heteroaryl group having 4 to 24 carbon atoms which is substituted or unsubstituted (which has at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, and an amino group as a substituent);
an aralkyl or heteroaralkyl group (a linear or branched alkyl group having 1 to 4 carbon atoms is substituted with the aryl group or the heteroaryl group);
a substituted or unsubstituted phenoxy or naphthoxy group (which has at least one substituent selected from a linear or branched alkyl group or alkoxy group having 1 to 6 carbon atoms as a substituent) ;
$-NH_2$, -NHR, $-CONH_2$, or -CONHR (R is a linear or branched alkyl group having 1 to 6 carbon atoms); or
$-OCOR_8$ or $-COOR_8$ (here, $R_8$ is a linear or branched alkyl group having 1 to 6 carbon atoms, a cycloalkyl group having 3 to 6 carbon atoms, or a phenyl group which is substituted with at least one substituent of a substituted aryl group or a substituted heteroaryl group of $R_1$ and $R_2$ or an unsubstituted phenyl group).

It is possible to form at least one aromatic ring groups or non-aromatic ring groups by bonding of at least two adjacent $R_3$'s to each other and by including the carbon atom to which $R_3$ is bonded. The aromatic ring group or non-aromatic ring group includes one ring or two annelated rings which optionally include a heteroatom selected from the group consisting of oxygen, sulfur, and nitrogen.

l is an integer of 0 to 2. m is an integer of 0 to 4.

Additionally, examples of the naphthopyran-based compound include compounds obtained by adding a light adjusting dye molecule to at least one terminal of each of a polysiloxane oligomer, a polyalkylene oxide, and a polyalkyl ester, described in WO2013/78086, WO2012/149599, WO2010/020770, and WO2009/146509, and a compound having two or more naphthopyran rings in one molecule by bonding of structures represented by General Formula (3) or (4) by a linking group.

Compound (D) is represented by the following General Formula (5) (hereinafter, also referred to as the compound (5)).

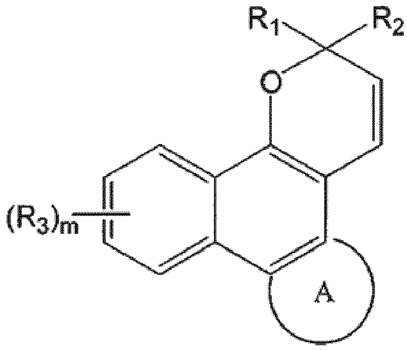

(5)

Each of $R_1$, $R_2$, $R_3$, and m has the same meaning as that described for General Formula (3) above, and A represents annelated rings represented by the following Formulas ($A_1$) to ($A_5$).

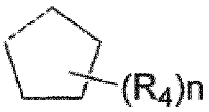

($A_1$)

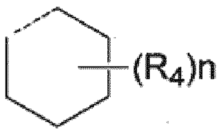

($A_2$)

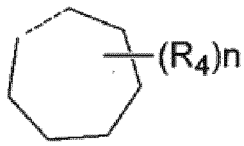

($A_3$)

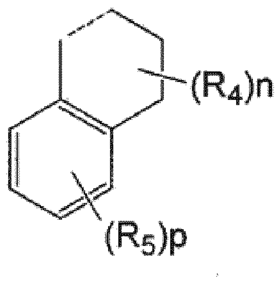

($A_4$)

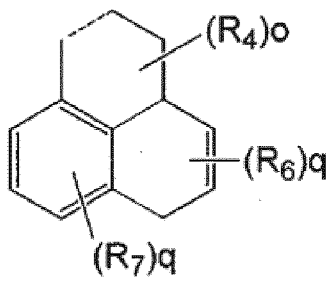

($A_5$)

In these annelated rings ($A_1$) to ($A_5$), a dotted line represents a carbon $C_5$-carbon $C_6$ bond of the naphthopyran ring in General Formula (5). The $\alpha$ bond of the annelated ring ($A_4$) or ($A_5$) is bonded to the carbon $C_5$ or the carbon $C_6$ of the naphthopyran ring in General Formula (5) .

$R_4$'s may be the same as or different from each other, and each $R_4$'s independently represents OH or a linear or branched alkyl group or alkoxy group having 1 to 6 carbon atoms, or two $R_4$'s form a carbonyl group (CO).

Each of $R_5$, $R_6$, and $R_7$ independently represents a halogen atom (preferably, a fluorine atom, a chlorine atom, or a bromine atom);

a linear or branched alkyl group having 1 to 12 carbon atoms (preferably, a linear or branched alkyl group having 1 to 6 carbon atoms);

a linear or branched haloalkyl group having 1 to 6 carbon atoms which is substituted with at least one halogen atom

(preferably, a fluoroalkyl group);
a cycloalkyl group having 3 to 12 carbon atoms;
a linear or branched alkoxy group having 1 to 6 carbon atoms;
a substituted or unsubstituted phenyl or benzyl group (which has at least one of substituents described above in the definition of $R_1$ and $R_2$ groups as a substituent in a case where each of $R_1$ and $R_2$ groups in General Formula (5) independently corresponds to an aryl or heteroaryl group);
$-NH_2$ or -NHR (here, R is a linear or branched alkyl group having 1 to 6 carbon atoms);
a substituted or unsubstituted phenoxy or naphthoxy group (which has at least a linear or branched alkyl group or alkoxy group having 1 to 6 carbon atoms as a substituent); or
a $-COR_9$, $-COOR_9$, or $-CONHR_9$ group (here, $R_9$ represents a linear or branched alkyl group having 1 to 6 carbon atoms, a cycloalkyl group having 3 to 6 carbon atoms, or a substituted or unsubstituted phenyl or benzyl group (which has at least one of substituents described above in the definition of $R_1$ and $R_2$ groups as a substituent in a case where each of $R_1$ and $R_2$ groups in General Formula (5) independently corresponds to an aryl or heteroaryl group)).

n is an integer of 0 to 6, o is an integer of 0 to 2, p is an integer of 0 to 4, and q is an integer of 0 to 3.

In a case where A represents ($A_4$), n is an integer of 0 to 2, and p is an integer of 0 to 4, and in a case where A represents ($A_2$), n is an integer of 0 to 2.

The photochromic compound (D) of General Formula (5) has high coloring adaptability even at 40ºC by being combined with the discoloration reaction rate that is applied to the use being required. The colors capable of being easily achieved are colors from orange to blue.

In the present embodiment, a mixture of the compound (5) belonging to at least one different kind selected from the group consisting of the compound (5) in which A is ($A_1$), the compound (5) in which A is ($A_2$), the compound (5) in which A is ($A_3$), the compound (5) in which A is ($A_4$), and the compound (5) in which A is ($A_5$) also is included.

In the present embodiment, as the compound (5), the compound represented by the following General Formula (6) can be preferably used.

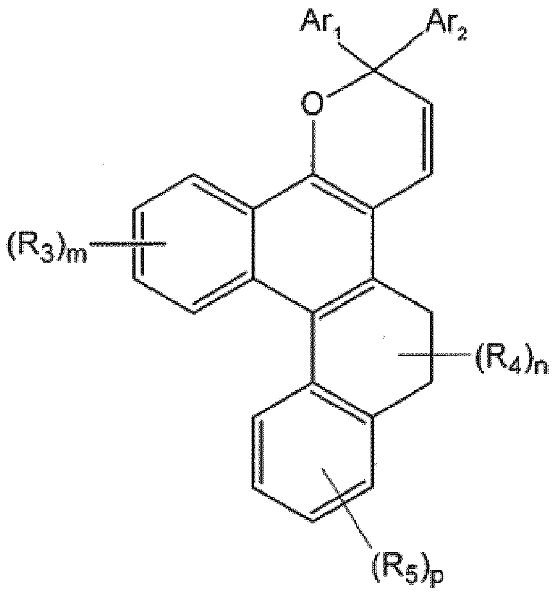

(6)

$Ar_1$ and $Ar_2$ are aromatic groups, and these may be the same as or different from each other, and each of $Ar_1$, and $Ar_2$ represents a benzene ring or a thiophene ring which optionally be substituted. As the substituent of the benzene ring or the thiophene ring, a linear or branched alkyl group having 1 to 10 carbon atoms, a linear or branched alkoxy group having 1 to 10 carbon atoms, or a linear or branched alkyl mono (or di) substituted amino group having 1 to 6 carbon atoms can be exemplified. Each of $R_3$, $R_4$, $R_5$, m, n, and p has the same meaning as that described above.

As the compound (5), the compound represented by the following General Formula (7) can be more preferably used.

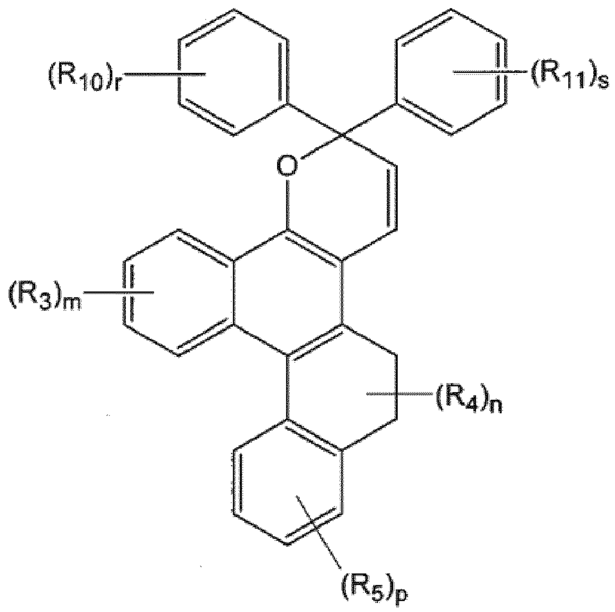

(7)

In Formula (7), $R_{10}$ and $R_{11}$ may be the same as or different from each other, and each of $R_{10}$ and $R_{11}$ represents a linear or branched alkyl group having 1 to 10 carbon atoms, a linear or branched alkoxy group having 1 to 10 carbon atoms, or a linear or branched alkyl mono (or di) substituted amino group having 1 to 6 carbon atoms. When m is 2, it is possible to form a ring structure by bonding of adjacent $R_3$'s to each other and by including the carbon atom to which $R_3$ is bonded. Each of r and s is an integer of 0 to 4. The above ring structure is a structure of an aryl group having 6 to 24 carbon atoms or a heteroaryl group having 3 to 24 carbon atoms which is substituted or unsubstituted.

Each of $R_3$, $R_4$, $R_5$, m, n, and p has the same meaning as that described above.

As specific examples of the compound represented by General Formula (7), the compound represented by the following Formula (8) or (9) is exemplified. In the present embodiment, the compound represented by Formula (8) or (9) is preferable.

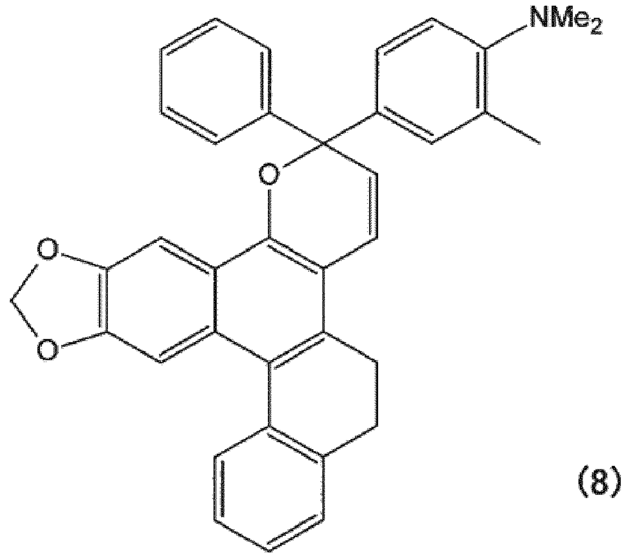

(8)

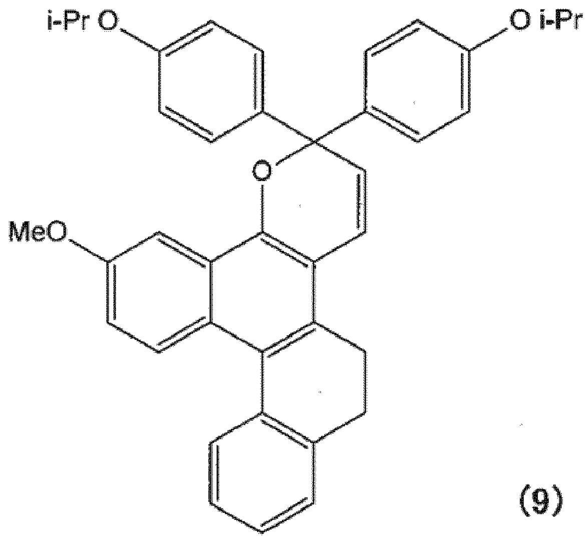

(9)

The compound represented by General Formula (5) which is the photochromic compound (D) can be synthesized by a known method. For example, the compound can also be synthesized by the method described in PCT Japanese Translation Patent Publication No. 2004-500319.

Also disclosed herein as specific examples of the naphthopyran-based compound represented by General Formula (3), the compound represented by the following Formula (10) can be preferably exemplified.

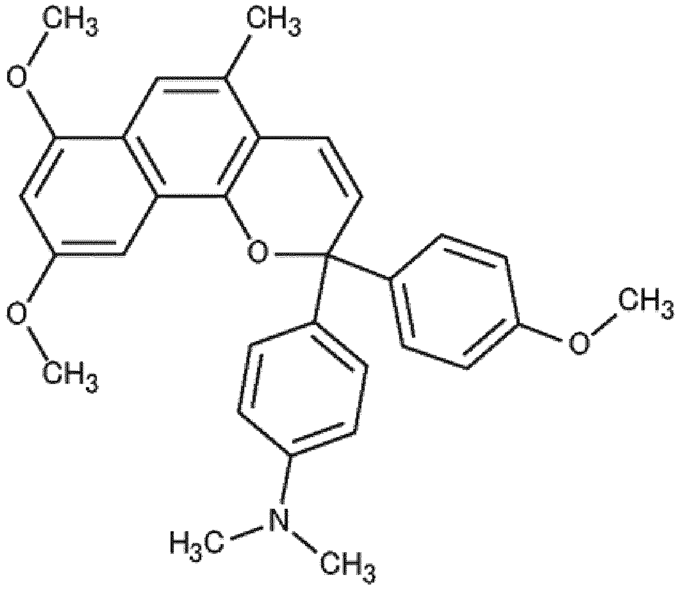

(10)

[Other Components]

In the present embodiment, in addition to the components (A) to (D), a polymerization catalyst, an internal mold release agent, a resin modifier, or the like may be further included in the polymerizable composition for optical materials.

Examples of the polymerization catalyst include a tertiary amine compound and an inorganic acid salt or an organic acid salt thereof, a metal compound, a quaternary ammonium salt, and an organic sulfonic acid.

An acidic phosphoric ester can be used as the internal mold release agent. Examples of the acidic phosphoric ester include a phosphoric monoester and a phosphoric diester, and the acidic phosphoric ester can be used alone or in a mixture of two or more kinds thereof.

Examples of the resin modifier include olefin compounds and the like including an episulfide compound, an alcohol compound, an amine compound, an epoxy compound, an organic acid and an anhydride thereof, or a (meth)acrylate compound.

<Process for Producing Polymerizable Composition for Optical Materials>

The polymerizable composition for optical materials of the present embodiment can be prepared by mixing the isocyanate compound (A), the polyol compound (B), the active hydrogen compound (C), and the photochromic compound (D).

In the present embodiment, the lower limit of the functional group equivalent ratio (B/A) of the polyol compound (B) to the polyisocyanate compound (A) is 0.02 or more, preferably 0.10 or more, more preferably 0.15 or more, still more preferably 0.20 or more, and particularly preferably 0.25 or more, and the upper limit thereof is 0.60 or less, preferably 0.50 or less, more preferably 0.40 or less, and still more preferably 0.30 or less. The upper limit and the lower limit can be suitably combined.

The lower limit of the functional group equivalent ratio (C/A) of the active hydrogen compound (C) to the polyisocyanate compound (A) is 0.30 or more, preferably 0.40 or more, more preferably 0.50 or more, and still more preferably 0.60 or more, and the upper limit thereof is 0.99 or less, preferably 0.98 or less, more preferably 0.90 or less, and still more preferably 0.80 or less. The upper limit and the lower limit can be suitably combined.

In a case where the equivalent ratio is within the above range, high photochromic property can be exhibited, and an optical material which is excellent in terms of balance, having excellent mechanical properties which are the features of a poly (thio) urethane-based resin, can be provided.

For example, in a case where the compound represented by General Formula (I) is polyethylene glycol, when the functional group equivalent ratio (B/A) is less than 0.1, improvement of the color-developing property is not sufficiently obtained, in some cases. When the functional group equivalent ratio (B/A) is greater than 0.6, the polymer becomes clouded, in some cases.

In addition, in a case where the compound represented by General Formula (I) is polypropylene glycol, when the functional group equivalent ratio (B/A) is less than 0.06, improvement of the color-developing property is not sufficiently obtained, in some cases. When the functional group equivalent ratio (B/A) is greater than 0.6, the polymer becomes clouded, in some cases.

In addition, for the compound represented by General Formula (II), when the functional group equivalent ratio (B/A) is less than 0.06, improvement of the color-developing property is not sufficiently obtained, in some cases. When the functional group equivalent ratio (B/A) is greater than 0.6, the polymer becomes clouded, in some cases.

In addition, in a case where the compound represented by General Formula (III) is a polyethylene glycol adduct of bisphenol A or a polypropylene glycol adduct of bisphenol A, when the functional group equivalent ratio (B/A) is less than 0.06, improvement of the color-developing property is not sufficiently obtained, in some cases. In addition, when the functional group equivalent ratio (B/A) is greater than 0.6, the polymer becomes clouded, in some cases.

In addition, in a case where the compound represented by General Formula (IV) is a polyester compound obtained by reacting an equimolar mixture of adipic acid and isophthalic acid with 3-methyl-1,5-pentanediol in equimolar ratio, when the functional group equivalent ratio (B/A) is less than 0.02, improvement of the color-developing property is not sufficiently obtained, in some cases. When the functional group equivalent ratio (B/A) is greater than 0.2, the polymer becomes clouded, in some cases.

In the composition, the molar ratio (NCO group / (OH group and SH group)) of the NCO groups in the polyisocyanate compound (A) to the total sum of the OH groups and the SH groups in the polyol compound (B) and the active hydrogen compound (C) is typically within a range of 0.8 to 1.2, preferably within a range of 0.85 to 1.15, and more preferably within a range of 0.9 to 1.1.

In a case where the molar ratio of NCO group/ (OH group + SH group) is 0.8 or more, an unreacted OH group or SH group does not remain, the composition is sufficiently cured, and thus, a resin excellent in heat resistance, moisture resistance, and light-fastness is obtained, and in a case where the ratio of NCO group/(OH group + SH group) is 1.2 or less, an unreacted NCO group does not remain, a resin excellent in heat resistance, moisture resistance, and light-fastness is obtained, there is no need to raise the reaction temperature to reduce the unreacted NCO groups, disadvantages such as coloring are not showed, and thus, the resin is preferable as the resin material.

The photochromic compound (D) can be used within a range of 10 ppm to 5000 ppm with respect to the total amount of the isocyanate compound (A), the polyol compound (B), and the active hydrogen compound (C).

The temperature in a case where a polymerizable composition is prepared by mixing the polyisocyanate compound (A), the polyol compound (B), the active hydrogen compound (C), the photochromic compound (D), and other additives is typically 25ºC or lower. There are cases in which the temperature is preferably a lower temperature from the viewpoint of a pot life of the polymerizable composition. However, in a case in which the solubility of the catalyst, the internal mold release agent, and the additives in the monomer are not favorable, it is also possible to dissolve the catalyst, the internal mold release agent, and the additives in the monomer and the resin modifier by heating the catalyst, the internal mold release agent, and the additive in advance.

The mixing order or the mixing method of respective components in the composition is not particularly limited as long as the respective components can be homogeneously mixed by the mixing order or the mixing method, and the

mixing can be performed by a known method. Examples of the known method include a method in which a master batch including a predetermined amount of additives is prepared, and the master batch is dispersed and dissolved in a solvent.

In the present embodiment, a process for producing optical materials is not particularly limited, but preferable examples of the production method include cast polymerization. First, the polymerizable composition is injected into a mold held using a gasket, tape, or the like. At this time, there are many cases in which a degassing treatment, a filtration treatment such as pressurization or depressurization, and the like under reduced pressure are preferably carried out as necessary depending on physical properties that obtained plastic lenses require.

Since polymerization conditions significantly vary depending on the composition ratio of the polymerizable composition, the kinds and the amount of the catalyst used, the shape of the mold, and the like, the polymerization conditions are not limited, but the polymerization is performed at a temperature of -50ºC to 150ºC over a period of 1 hour to 50 hours. Depending on cases, the polymerizable composition is preferably held in a temperature range of 10ºC to 150ºC or slowly heated, and cured for 1 hour to 25 hours.

The optical material may be subjected to a treatment such as annealing, as necessary. The treatment is performed typically at a temperature within a range of 50ºC to 150ºC, and preferably performed at a temperature within a range of 90ºC to 140ºC, and more preferably performed at a temperature within a range of 100ºC to 130ºC.

In the present embodiment, when a resin is formed, in addition to the "other components", various additives such as a chain extender, a crosslinking agent, a light stabilizer, an ultraviolet absorber, an antioxidant, a bluing agent, an oil-soluble dye, a filler, and an adhesion improver may be added according to the purpose, similarly to known molding methods.

<Uses>

The polymerizable composition of the present embodiment can be obtained as molded bodies having various shapes by changing the type of molds at the time of cast polymerization. Since the molded product has photochromic property, a high refractive index, and high transparency, the molded product can be used in various optical materials such as a plastic lens. In particular, the molded product can be suitably used in a plastic spectacle lens.

[Plastic Spectacle Lens]

Plastic spectacle lenses using a lens substrate comprised of the molded product of the present embodiment may be provided with a coating layer on a single surface or both surfaces thereof as necessary, and then used.

The plastic spectacle lens of the present embodiment is comprised of a lens substrate comprised of the polymerizable composition described above and a coating layer.

Specific examples of the coating layer include a primer layer, a hard coating layer, an antireflection layer, an antifog coated layer, an antifouling layer, and a water-repellent layer. It is possible to solely use each of these coating layers, or it is possible to use after multilayering the plurality of coating layers. In a case where the coating layers are provided on both surfaces, similar coating layers may be provided, or different coating layers may be provided on the respective surfaces.

In the coating layers, an ultraviolet absorbent for the purpose of protecting lenses or eyes from ultraviolet rays, infrared absorbent for the purpose of protecting eyes from infrared rays, a light stabilizer or an antioxidant for the purpose of improving weather resistance of lenses, a dye or a pigment for the purpose of improving fashionability of lenses, an antistatic agent, and other well-known additives for enhancing propertys of lenses may respectively be jointly used. For layers coated by coating, a variety of leveling agents may be used for the purpose of improving coatability.

The primer layer is typically formed between the hard coating layer described below and a lens. The primer layer is a coating layer having a purpose of improving adhesion between the hard coating layer formed on the primer layer and the lens, and, depending on cases, it is also possible to improve impact resistance. Although any material can be used for the primer layer as long as it has high adhesion to an obtained lens, typically, a primer composition or the like including a urethane-based resin, an epoxy-based resin, a polyester-based resin, a melanin-based resin, and polyvinyl acetal, as a main component, is used. For the primer composition, a suitable solvent having no influence on lenses may be used for the purpose of adjusting a viscosity of the composition. It is needless to say that the primer composition may be used without a solvent.

The primer layer can be formed by any one of a coating method and a dry method. In a case where the coating method is used, the primer layer is formed by applying the primer composition to a lens by a well-known coating method such as a spin coating or a dip coating, and then solidifying the primer composition. In a case where the dry method is performed, the primer layer is formed by a well-known dry method such as a CVD method or a vacuum deposition method. When the primer layer is formed, a pretreatment such as an alkali treatment, a plasma treatment, or an ultraviolet treatment may be performed on surfaces of a lens as necessary for the purpose of improving adhesion.

The hard coating layer is a coating layer for the purpose of imparting functions of abrasion resistance, wear

resistance, moisture resistance, warm water resistance, heat resistance, weather resistance, and the like to the surfaces of a lens.

As the hard coating layer, a hard coating composition including at least one kind of fine particles made up of a curable organic silicon compound and fine particles of at least one oxide of elements selected from an element group of Si, Al, Sn, Sb, Ta, Ce, La, Fe, Zn, W, Zr, In, and Ti and/or a composite oxide of at least two elements selected from the above element group is generally used.

The hard coating composition preferably includes at least any one of amines, amino acids, metal acetylacetonate complexes, organic acid metallic salts, perchloric acids, salts of perchloric acids, acids, metallic chlorides, and polyfunctional epoxy compounds, in addition to the above-described components. For the hard coating composition, a suitable solvent having no influence on lenses may be used, or the composition may be used without a solvent.

The hard coating layer is typically formed by coating with the hard coating composition by a well-known coating method such as a spin coating or a dip coating, and then curing the composition. Examples of a curing method include a curing method in which thermal curing or radiation of energy rays, such as ultraviolet rays or visible light rays, is used. A refractive index of the hard coating layer is preferably within a range of a difference of $\pm 0.1$ from the refractive index of the lens in order to suppress the occurrence of interference fringe.

The antireflection layer is typically formed on the hard coating layer as necessary. There are inorganic antireflection layers and organic antireflection layers, and the inorganic antireflection layers are formed using an inorganic oxide such as $SiO_2$ or $TiO_2$ by a dry method such as a vacuum deposition method, a sputtering method, an ion plating method, an ion beam assisting method, or a CVD method. The organic antireflection layers are formed using a composition including an organic silicon compound and silica-based fine particles having internal cavities by a wet method.

Single antireflection layer or multiple antireflection layers may be provided, and, in a case where single antireflection layer is used, the refractive index of the antireflection layer is preferably smaller than the refractive index of the hard coating layer by at least 0.1 or more. In order to effectively develop an antireflection function, it is preferable to form multiple antireflection films, and, in this case, films having a low refractive index and films having a high refractive index are alternately stacked. Even in this case, a difference in the refractive index between the films having a low refractive index and the films having a high refractive index is preferably 0.1 or more. Examples of the film having a high refractive index include films of ZnO, $TiO_2$, $CeO_2$, $Sb_2O_5$, $SnO_2$, $ZrO_2$, $Ta_2O_5$, and the like, and examples of the film having a low refractive index include films of $SiO_2$, and the like.

An antifog layer, an antifouling layer, or a water-repellent layer may be formed on the antireflection layer, as necessary. Regarding methods for forming an antifog layer, an antifouling layer, and a water-repellent layer, treatment methods, treatment materials, and the like are not particularly limited as long as no adverse influences are brought to the antireflection function, and well-known antifog treatment methods, antifouling treatment methods, water-repellency-providing treatment methods, and materials can be used. Examples of the antifog treatment method and the antifouling treatment method include a method in which the surface is covered with a surfactant, a method in which a hydrophilic film is added to the surface so as to provide water absorbability, a method in which the surface is coated with fine irregularity so as to enhance water absorbability, a method in which a photocatalytic activity is used so as to provide water absorbability, and a method in which a super water-repellency-providing treatment is carried out so as to prevent attachment of water droplets. In addition, examples of the water-repellency-providing treatment method include a method in which a water-repellency-provided layer is formed using a fluorine-containing silane compound or the like and deposition or sputtering and a method in which a fluorine-containing silane compound is dissolved in a solvent and then applied so as to form a water-repellency-provided layer.

Examples

Next, the present invention is described in more detail based on examples, but the present invention is not limited to these examples. Moreover, in the examples and comparative examples, the methods and equipment used in evaluation are as follows.

(a) The amount of changes ($\Delta$T%max) in light transmittance before and after coloring: under the conditions of the ultraviolet intensity of 1.2 mW/$cm^2$ measured by an accumulated light quantity meter at a temperature of 19ºC using a metal halide lamp (180 W) light source device, a molded product sample processed into a thickness of 2.0 mm was colored for 5 minutes. Spectroscopies were measured by a transmission measurement system before and after coloring, and the amount of changes in light transmittance before and after coloring was determined by the following equation.

Amount of changes (ΔT%max) in light transmittance before and after coloring = light transmittance (T%max) at maximum absorption wavelength (λmax) at the time of coloring - light transmittance (T% 0) at (λmax) before coloring

As the amount of changes in light transmittance is increased, light becomes brighter at the time of color-fading, and the light shielding properties become higher at the time of coloring, and thus, the photochromic property becomes high.

(b) Color fading half-life (F1/2): the color fading half-life is defined as the time period necessary for the absorbance of the molded product sample at λmax to be recovered to an intermediate value of the absorbance before and after coloring from stopping irradiation with light rays after coloring for 5 minute described above. As the time period is shorter, the color fading rate is faster, and thus, the photochromic property becomes high.

- Light source: a metal halide lamp light source device "LA-180ME" manufactured by HAYASHI WATCH-WORKS
- Accumulated light quantity meter: an accumulated light quantity meter "UIT-102 (photodetector UVD365PD)" manufactured by USHIO Inc.
- Transmission measurement system: "MV-3150" manufactured by JASCO Corporation

(c) Tension test: using an autograph AGS-J manufactured by Shimadzu Corporation, steel shafts passed through two holes opened in a resin sample are pulled until the sample was broken at a rate of 5 mm per minute, and the stress at the time when the sample was elongated to the yielding point was recorded as the tensile strength. As both numerical values are increased, the material is not easily broken.

- Tension test sample: holes having a diameter of 1.6 mm were opened at two points facing the diameter direction at the position 5.0 mm apart in the center direction from the outer periphery on a disc-shape molded product having a diameter of 45 mm and a thickness of 2.0 mm, and as a result, a tensile test sample was obtained.

[Example 1]

0.05 parts by mass of a compound represented by Formula (9) as a photochromic compound and 0.15 parts by mass of dimethyltin dichloride were added to 49.6 parts by mass of 1,3-bis (isocyanatomethyl) cyclohexane, and the resultant product was mixed and stirred to dissolve the solid thereof. 40.9 parts by mass of polyethylene glycol having a number average molecular weight of 400 and 9.5 parts by mass of glycerin were added to this mixed liquid, and the resultant product was mixed and continuously stirred. When the solution became clear, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours . After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 575 nm) was 65.2% and the color fading half-life (F1/2) was 375 seconds were obtained. Furthermore, in the tension test, favorable results that the tensile strength was 32 kgf and the elongation was 12.6% were obtained. The results are shown in Table-1.

[Example 2]

0.05 parts by mass of a compound represented by Formula (9) as a photochromic compound and 0.15 parts by mass of dimethyltin dichloride were added to 39.3 parts by mass of 1,3-bis (isocyanatomethyl) cyclohexane, and the resultant product was mixed and stirred to dissolve the solid thereof. 29.1 parts by mass of polyethylene glycol having a number average molecular weight of 400 and 31.6 parts by mass of pentaerythritol tetrakis(2-mercaptoacetate) were added to this mixed liquid, then, the resultant product was sufficiently mixed, stirred, and degassed at 5 mmHg for 20 minutes, and this solution was injected into a sheet type mold formed of polyethylene. This was put into a furnace at

20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. When the photochromic property of the molded product was evaluated, the amount of changes (ΔT%max) in light transmittance before and after coloring at the maximum absorption wavelength (λmax: 575 nm) was 32.5%, and the color fading half-life (F1/2) was 1500 seconds. Furthermore, in the tension test, favorable results that the tensile strength was 38 kgf and the elongation was 5.9% were obtained. The results are shown in Table-1.

[Example 3]

0.05 parts by mass of the compound represented by Formula (9) as a photochromic compound and 0.70 parts by mass of dimethyltin dichloride were added to 45.8 parts by mass of dicyclohexylmethane-4,4'-diisocyanate in the same manner as in Example 1, and the resultant product was mixed and stirred to dissolve the solid thereof. 28.4 parts by mass of polyethylene glycol having a number average molecular weight of 1000 and 25.8 parts by mass of 4-mercaptomethyl-1,8-dimercapto-3,6-dithiaoctane were added to this mixed liquid, and the resultant product was mixed to dissolve the solid thereof. When the solution became clear, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 575 nm) was 60.6% and the color fading half-life (F1/2) was 345 seconds were obtained. Next, when a tension test was performed on a tension test sample obtained from the molded product, results that the tensile strength was 45 kgf and the elongation was 7.7% were obtained. The results are shown in Table-1.

[Example 4]

0.05 parts by mass of the compound represented by Formula (9) as a photochromic compound and 0.70 parts by mass of dimethyltin dichloride were added to 44.7 parts by mass of dicyclohexylmethane-4,4'-diisocyanate in the same manner as in Example 1, and the resultant product was mixed and stirred to dissolve the solid thereof. 27.7 parts by mass of polyethylene glycol having a number average molecular weight of 2000 and 27.6 parts by mass of 4-mercaptomethyl-1,8-dimercapto-3,6-dithiaoctane were added to this mixed liquid, and the resultant product was mixed to dissolve the solid thereof. When the solution became clear, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 575 nm) was 65.9% and the color fading half-life (F1/2) was 210 seconds were obtained. Furthermore, in the tension test, favorable results that the tensile strength was 39 kgf and the elongation was 6.9% were obtained. The results are shown in Table-1.

[Example 5]

0.05 parts by mass of the compound represented by Formula (9) as a photochromic compound and 0.70 parts by mass of dimethyltin dichloride were added to 43.2 parts by mass of dicyclohexylmethane-4,4'-diisocyanate in the same manner as in Example 1, and the resultant product was mixed and stirred to dissolve the solid thereof. 33.5 parts by mass of polypropylene glycol having a number average molecular weight of 1000 and 23.3 parts by mass of 4-mercaptomethyl-1,8-dimercapto-3,6-dithiaoctane were added to this mixed liquid, and the resultant product was mixed to dissolve the solid thereof. When the solution became clear, the liquid was degassed at 5 mmHg for 20 minutes, and this solution was injected into a sheet type mold formed of polyethylene. This was put into a furnace at 20ºC and kept

for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 570 nm) was 70.6% and the color fading half-life (F1/2) was 165 seconds were obtained. Furthermore, in the tension test, favorable results that the tensile strength was 34 kgf and the elongation was 7.8% were obtained. The results are shown in Table-1.

[Example 6]

0.05 parts by mass of the compound represented by Formula (9) as a photochromic compound and 0.01 parts by mass of dimethyltin dichloride were added to 40.8 parts by mass of m-xylylene diisocyanate, and the resultant product was mixed and stirred to dissolve the solid thereof. 26.1 parts by mass of polyethylene glycol having a number average molecular weight of 1000 and 33.1 parts by mass of 4-mercaptomethyl-1,8-dimercapto-3,6-dithiaoctane were added to this mixed liquid, and the resultant product was mixed and stirred. When the solution became homogeneous, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 570 nm) was 49.6% and the color fading half-life (F1/2) was 1100 seconds were obtained. Furthermore, in the tension test, favorable results that the tensile strength was 42 kgf and the elongation was 8.3% were obtained. The results are shown in Table-1.

[Example 7]

0.05 parts by mass of the compound represented by Formula (9) as a photochromic compound and 0.01 parts by mass of dimethyltin dichloride were added to 40.8 parts by mass of m-xylylene diisocyanate, and the resultant product was mixed and stirred to dissolve the solid thereof. 26.1 parts by mass of polypropylene glycol having a number average molecular weight of 1000 and 33.1 parts by mass of 4-mercaptomethyl-1,8-dimercapto-3,6-dithiaoctane were added to this mixed liquid, and the resultant product was mixed and stirred. When the solution became homogeneous, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 570 nm) was 75.5% and the color fading half-life (F1/2) was 115 seconds were obtained. Furthermore, in the tension test, favorable results that the tensile strength was 41 kgf and the elongation was 8.4% were obtained. The results are shown in Table-1.

[Example 8]

0.05 parts by mass of the compound represented by Formula (9) as a photochromic compound and 0.10 parts by mass of dimethyltin dichloride were added to 42.8 parts by mass of 2,5(2,6)-bis(isocyanatomethyl)bicyclo[2.2.1] heptane, and the resultant product was mixed and stirred to dissolve the solid thereof. 25.2 parts by mass of polypropylene glycol having a number average molecular weight of 1000 and 32.0 parts by mass of 4-mercaptomethyl-1,8-dimercapto-3,6-dithiaoctane were added to this mixed liquid, and the resultant product was mixed and stirred. When the solution became homogeneous, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was

taken out from the furnace, and by removing the mold, a molded product obtained by polymerization was obtained (a disc-shape having a diameter of 45 mm and a thickness of 2.0 mm) .

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 570 nm) was 71.8% and the color fading half-life (F1/2) was 135 seconds were obtained. Furthermore, in the tension test, favorable results that the tensile strength was 50 kgf and the elongation was 6.7% were obtained. The results are shown in Table-1.

[Example 9]

0.05 parts by mass of the compound represented by Formula (9) as a photochromic compound and 0.10 parts by mass of dimethyltin dichloride were added to 41.0 parts by mass of 2,5(2,6)-bis(isocyanatomethyl)bicyclo[2.2.1] heptane, and the resultant product was mixed and stirred to dissolve the solid thereof. 22.5 parts by mass of polypropylene glycol having a number average molecular weight of 700 and 36.5 parts by mass of pentaerythritol tetrakis (2-mercaptoacetate) were added to this mixed liquid, and the resultant product was mixed and stirred. When the solution became homogeneous, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 570 nm) was 57.1% and the color fading half-life (F1/2) was 190 seconds were obtained. Furthermore, in the tension test, favorable results that the tensile strength was 58 kgf and the elongation was 6.9% were obtained. The results are shown in Table-1.

[Example 10]

0.05 parts by mass of the compound represented by Formula (9) as a photochromic compound and 0.10 parts by mass of dimethyltin dichloride were added to 38.6 parts by mass of 2,5(2,6)-bis(isocyanatomethyl)bicyclo[2.2.1] heptane, and the resultant product was mixed and stirred to dissolve the solid thereof. 35.2 parts by mass of a polypropylene glycol adduct of 2,2-bis(4-hydroxyphenyl) propane (bisphenol A) having a number average molecular weight of 927 (701 in terms of addition PPG) and 26.2 parts by mass of 4-mercaptomethyl-1,8-dimercapto-3,6-dithiaoctane were added to this mixed liquid, and the resultant product was mixed and stirred. When the solution became homogeneous, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm) .

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 570 nm) was 55.1% and the color fading half-life (F1/2) was 1100 seconds were obtained. Furthermore, in the tension test, favorable results that the tensile strength was 59 kgf and the elongation was 7.4% were obtained. The results are shown in Table-1.

[Example 11]

0.05 parts by mass of the compound represented by Formula (9) as a photochromic compound and 0.10 parts by mass of dimethyltin dichloride were added to 41.9 parts by mass of 2,5(2,6)-bis(isocyanatomethyl)bicyclo[2.2.1] heptane, and the resultant product was mixed and stirred to dissolve the solid thereof. 24.6 parts by mass of a polyester compound having a number average molecular weight of 2000 obtained by reacting an equimolar mixture of adipic acid and isophthalic acid with 3-methyl-1,5-pentanediol in equimolar ratio and 33.5 parts by mass of 4-mercaptomethyl-1,8-dimercapto-3,6-dithiaoctane were added to this mixed liquid, and the resultant product was mixed and stirred. When the solution became homogeneous, the liquid was degassed at 5 mmHg for 20 minutes, and this solution was injected into a sheet type mold formed of polyethylene. This was put into a furnace at 20ºC and kept for 8 hours, and the temperature

was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm) .

The molded product was colorless and transparent, and had favorable photochromic property of being colored purple immediately after it was placed under solar light rays and being decolored when it was shielded from light rays. The photochromic property of the molded product was evaluated, and favorable results that the amount of changes (ΔT%max) in light transmittance before and after coloring at the maximum absorption wavelength (λmax: 570 nm) was 61.9% and the color fading half-life (F1/2) was 145 seconds were obtained. Furthermore, in the tension test, favorable results that the tensile strength was 56 kgf and the elongation was 7.0% were obtained. The results are shown in Table-1.

[Comparative Example 1]

0.05 parts by mass of the compound represented by Formula (9) as a photochromic compound was dissolved in 100 parts by mass of a mixed solution of 50 parts by mass of 2,2'-bis[4-(methacryloyloxyethoxy)phenyl] propane and 50 parts by mass of triethylene glycol dimethacrylate, 1.0 part by mass of t-butyl peroxyneodecanoate as a polymerization initiator and 1.0 part by mass of 2,4-diphenyl-4-methyl-1-pentene as a polymerization degree adjusting agent were added thereto, then, the resultant product was mixed and degassed at 5 mmHg for 20 minutes, and this solution was injected into a sheet type mold formed of polyethylene. This was put into a furnace at 20ºC and kept for 8 hours, and the temperature was raised to 90ºC over a period of 12 hours. After the resultant product was heated at 90ºC for 3 hours, the mold was taken out from the furnace, and by removing the mold, a molded product obtained by polymerization was obtained (a disc-shape having a diameter of 45 mm and a thickness of 2.0 mm).

The molded product was colorless and transparent, and had favorable photochromic property of being colored purple under solar light rays and being decolored immediately after it was shielded from light rays. When the photochromic property of the molded product was evaluated, the amount of changes (ΔT%max) in light transmittance before and after coloring at the maximum absorption wavelength (λmax: 575 nm) was 75.4%, and the color fading half-life (F1/2) was 255 seconds. When a tension test was performed on a tension test sample obtained from the molded product, results that the tensile strength was 14 kgf and the elongation was 0.9% were obtained. The results are shown in Table-1.

[Comparative Example 2]

0.05 parts by mass of the compound represented by Formula (9) as a photochromic compound and 0.70 parts by mass of dimethyltin dichloride were added to 59.4 parts by mass of dicyclohexylmethane-4,4'-diisocyanate in the same manner as in Example 1, and the resultant product was mixed and stirred to dissolve the solid thereof. 40.6 parts by mass of 4-mercaptomethyl-1,8-dimercapto-3,6-dithiaoctane was added to this mixed liquid, and the resultant product was mixed to dissolve the solid thereof. When the solution became clear, the liquid was degassed at 5 mmHg for 20 minutes, and this solution was injected into a sheet type mold formed of polyethylene. This was put into a furnace at 20ºC and kept for 8 hours, and the temperature was raised to 120ºC over a period of 12 hours. After the resultant product was heated at 120ºC for 3 hours, the mold was taken out from the furnace, and by removing the mold, a molded product obtained by polymerization was obtained (a disc-shape having a diameter of 45 mm and a thickness of 2.0 mm).

The molded product was colored purple, and when placed under solar light rays, the color became slightly darker. When the photochromic property of the molded product was evaluated, the amount of changes (ΔT%max) in light transmittance before and after coloring at the maximum absorption wavelength (λmax: 575 nm) was 10.0%, and since the absorbance at λmax was not recovered to one half of the absorbance before coloring even when one hour had elapsed after stopping irradiation with light rays, the color fading half-life (F1/2) could not be measurable. On the other hand, in the tension test, results that the tensile strength was 69 kgf and the elongation was 4.1% were obtained. The results are shown in Table-1.

From the results of Examples 1 to 11 and Comparative Example 2, it was found that, in Examples, both the amount of changes in light transmittance before and after coloring and the color fading half-life (F1/2) were more favorable compared to those in Comparative Examples, and the photochromic property was excellent. In addition, results that the color fading half-life (F1/2) of the resin obtained in Comparative Example 1 could not be measured, the resin was brittle, and the physical properties such as strength of the resin was poor, compared to the poly (thio) urethane resins obtained in the examples, were obtained.

[Table 1]

Table-1

| | Component A | Component B | Component C | Component D | Functional group equivalent ratio | | ΔT%max % | F1/2 sec | Tension kgf | Elongation % |
|---|---|---|---|---|---|---|---|---|---|---|
| | | | | | B/A | C/A | | | | |
| Example 1 | a-1 | b-1 | C-1 | Formula (9) | 0.40 | 0.60 | 65.2 | 375 | 32 | 12.6 |
| Example 2 | a-1 | b-1 | C-2 | Formula (9) | 0.36 | 0.64 | 32.5 | 1500 | 38 | 5.9 |
| Example 3 | a-2 | b-2 | C-3 | Formula (9) | 0.16 | 0.84 | 60.6 | 345 | 45 | 7.7 |
| Example 4 | a-2 | b-3 | C-3 | Formula (9) | 0.08 | 0.92 | 65.9 | 210 | 39 | 6.9 |
| Example 5 | a-2 | b-4 | C-3 | Formula (9) | 0.20 | 0.80 | 70.6 | 165 | 34 | 7.8 |
| Example 6 | a-3 | b-2 | C-3 | Formula (9) | 0.12 | 0.88 | 49.6 | 1100 | 42 | 8.3 |
| Example 7 | a-3 | b-4 | C-3 | Formula (9) | 0.12 | 0.88 | 75.5 | 115 | 41 | 8.4 |
| Example 8 | a-4 | b-4 | C-3 | Formula (9) | 0.12 | 0.88 | 71.8 | 135 | 50 | 6.7 |
| Example 9 | a-4 | b-5 | C-2 | Formula (9) | 0.16 | 0.84 | 57.1 | 190 | 58 | 6.9 |
| Example 10 | a-4 | b-6 | C-3 | Formula (9) | 0.20 | 0.80 | 55.1 | 1100 | 59 | 7.4 |
| Example 11 | a-4 | b-7 | C-3 | Formula (9) | 0.06 | 0.94 | 61.9 | 145 | 56 | 7.0 |
| Comparative Example 1 | Methacrylic resin | | | Formula (9) | - | - | 75.4 | 255 | 14 | 0.9 |
| Comparative Example 2 | a-2 | - | C-3 | Formula (9) | - | 1.00 | 10.0 | Unmeasurable | 69 | 4.1 |

The respective components described in Table-1 are as follows.

(Component A)

a-1: 1,3-bis(isocyanatomethyl) cyclohexane
a-2: dicyclohexylmethane-4,4'-diisocyanate
a-3: m-xylylene diisocyanate
a-4: a mixture of 2,5-bis(isocyanatomethyl)bicyclo[2.2.1] heptane and 2,6-bis(isocyanatomethyl)bicyclo[2.2.1] heptane

(Component B)

b-1: polyethylene glycol having a number average molecular weight of 400
b-2: polyethylene glycol having a number average molecular weight of 1000
b-3: polyethylene glycol having a number average molecular weight of 2000
b-4: polypropylene glycol having a number average molecular weight of 1000
b-5: polypropylene glycol having a number average molecular weight of 700
b-6: polypropylene glycol adduct of 2,2-bis(4-hydroxyphenyl) propane (also referred to as bisphenol A) having a number average molecular weight of 927.
b-7: polyester compound having a number average molecular weight of 2000 obtained by reacting an equimolar mixture of adipic acid and isophthalic acid with 3-methyl-1, 5-pentanediol in equimolar ratio

(Component C)

c-1: Glycerin
c-2: pentaerythritol tetrakis(2-mercaptoacetate)
c-3: 4-mercaptomethyl-1,8-dimercapto-3,6-dithiaoctane

From the above, the photochromic optical material of the present invention obtained by polymerizing a polymerizable composition including a di- or higher functional polyisocyanate compound (A), a polyol compound (B) represented by General Formula (1), a di- or higher functional active hydrogen compound (C), and a photochromic compound (D) could impart high photochromic property exceptional in poly(thio)urethane resins in the related art. Accordingly, the photochromic optical material of the present invention is extremely useful as an optical material having photochromic property, used in lenses for spectacles.

In addition, according to the production method of the present invention, it is possible to obtain a photochromic lens by preparing a polymerizable composition by dissolving the photochromic compound (D) in a monomer mixture including the di- or higher functional polyisocyanate compound (A), the polyol compound (B) represented by General Formula (1), the di- or higher functional active hydrogen compound (C) in advance, by injecting the composition into a mold, and by polymerizing the composition. That is, since photochromic property is imparted with lens molding at the same time, it is not necessary to additionally provide a coating layer for imparting photochromic property, and as a result, the number of steps in the production is small. Therefore, the production method of the present invention improves the production efficiency, and is advantage in terms of production cost. Furthermore, since the photochromic compound can be easily homogeneously dispersed into a lens substrate obtained by curing the polymerizable composition, it is extremely useful as a method of mass-producing a lens with stable quality having constant photochromic property regardless of the lens shape.

This application claims priority from Japanese Patent Application No. 2014-018928 filed on February 03, 2014,

The present invention also includes the following aspects.

[a1] A polymerizable composition for optical materials including (A) at least one kind of di- or higher functional polyisocyanate compounds, (B) at least one kind of compounds selected from compounds represented by General Formula (I) or (III), (C) at least one kind of di- or higher functional active hydrogen compounds (here, the compound (B) is excluded), and (D) a photochromic compound,

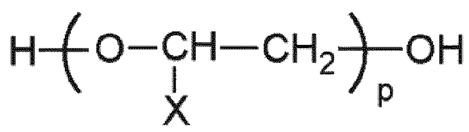

(I)

wherein, in Formula (I), p represents a numerical value of 4 to 100, X represents a hydrogen atom or a methyl group, and a plurality of X's may be the same as or different from each other,

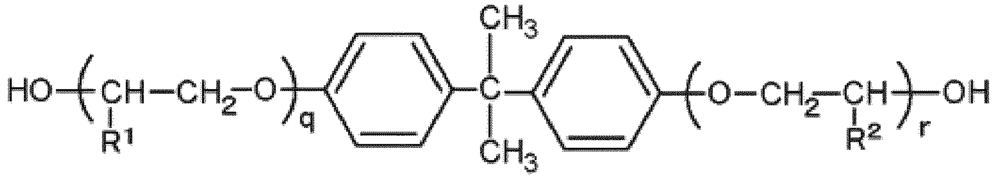

(III)

wherein, in Formula (III), each of q and r represents a numerical value of 1 or more, and the sum of q and r represents a numerical value of 2 to 100; and $R^1$ and $R^2$ may be the same as or different from each other, each of $R^1$ and $R^2$ represents a hydrogen atom or a methyl group, and a plurality of $R^{1'}$ s or $R^{2'}$ s may be the same as or different from each other.

the active hydrogen compound (C) is at least one kind selected from the group consisting of glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).

the photochromic compound (D) is represented by the following General Formula (5),

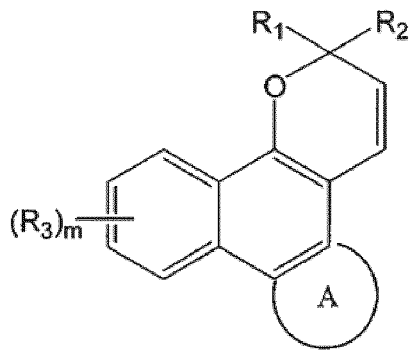

(5)

wherein in the formula, $R_1$ and $R_2$ may be identical or different, and independently represent
a hydrogen atom;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms in which these substituted groups , as a substituent, include at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms that is substituted by at least one halogen atom, a linear or branched haloalkoxy group having 1 to 12 carbon atoms that is substituted by at least one halogen atom, a phenoxy group or naphthoxy group substituted by at least one linear or branched alkyl group or alkoxy group having 1 to 12 carbon atoms, a linear or branched alkenyl group having 2 to 12 carbon atoms, a $-NH_2$ group, a -NHR group, a $-N(R)_2$ group in which R represents a linear or branched alkyl group having 1 to 6 carbon atoms, in which in a case that two Rs are present, the two Rs may be identical or different, a methacryloyl group and an acryloyl group; or
an aralkyl or heteroaralkyl group that a linear or branched alkyl group having 1 to 4 carbon atoms is substituted by the aryl group or the heteroaryl group,
$R_3$ may be identical or different, and independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms that is substituted by at least one halogen atom, a halocycloalkyl group having 3 to 12 carbon atoms that is substituted by at least one halogen atom, a linear or branched haloalkoxy group having 1 to 12 carbon atoms that is substituted by at least one halogen atom;

a substituted or unsubstituted aryl group having 6 to 24 carbon atoms or a substituted or unsubstituted heteroaryl group having 4 to 24 carbon atoms in which these substituted groups , as a substituent, include at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms that is substituted by at least one halogen atom, a linear or branched haloalkoxy group having 1 to 12 carbon atoms that is substituted by at least one halogen atom, a phenoxy group or naphthoxy group substituted by at least one linear or branched alkyl group or alkoxy group having 1 to 12 carbon atoms, a linear or branched alkenyl group having 2 to 12 carbon atoms, and an amino group;

an aralkyl or heteroaralkyl group that a linear or branched alkyl group having 1 to 4 carbon atoms is substituted by the aryl group or heteroaryl group;

a substituted or unsubstituted phenoxy group or naphthoxy group, in which these substituted groups, as a substituent, include at least one substituent selected from a linear or branched alkyl group or alkoxy group having 1 to 6 carbon atoms;

$-NH_2$, -NHR, $-CONH_2$, or -CONHR in which R represents a linear or branched alkyl group having 1 to 6 carbon atoms; or

$-OCOR_8$ or $-COOR_8$ in which $R_8$ represents a linear or branched alkyl group having 1 to 6 carbon atoms, a cycloalkyl group having 3 to 6 carbon atoms, or a phenyl group substituted by at least one substituents of the substituted aryl and the substituted heteroaryl group of $R_1$ or $R_2$, or an unsubstituted phenyl group;

m is an integer of 0 to 4;

A represents an annelated ring represented by the following Formula ($A_2$) or ($A_4$), and

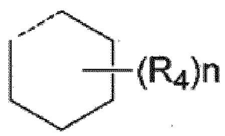

($A_2$)

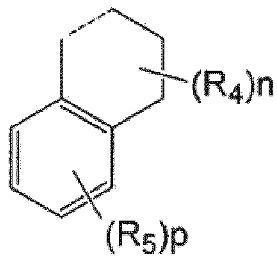

($A_4$)

wherein, in these annelated rings,

the dotted lines represent a chemical bond between a carbon $C_5$ and a carbon $C_6$ in a naphthopyran ring of a formula (5);

an $\alpha$ bond in the annelated ring (A4) can be bonded with the carbon $C_5$ or the carbon $C_6$ in the naphthopyran ring of Formula (5);

$R_4$ is identical or different, and independently represents OH, a linear or branched alkyl group or alkoxy group having 1 to 6 carbon atoms; two $R_4$s form carbonyl (CO);

$R_5$ represents halogen atom;

a linear or branched alkyl group having 1 to 12 carbon atoms;

a linear or branched haloalkyl group having 1 to 6 carbon atoms that is substituted by at least one halogen atom;

a cycloalkyl group having 3 to 12 carbon atoms;

a linear or branched alkoxy group having 1 to 6 carbon atoms;

a substituted or unsubstituted phenyl or benzyl group in which these substituted groups include at least one substituents described in the definition of the $R_1$ and $R_2$ groups as a substituent in a case that $R_1$ and $R_2$ in Formula (5) independently correspond to an aryl or heteroaryl group;

$-NH_2$ or -NHR in which R represents a linear or branched alkyl group having 1 to 6 carbon atoms;

a substituted or unsubstituted phenoxy group or naphthoxy group in which these substituted groups, as a substituent, include at least one substituent selected from a linear or branched alkyl group or alkoxy group having 1 to 6 carbon atoms; or

a $-COR_9$, $-COOR_9$, or $-CONHR_9$ group in which $R_9$ represents a linear or branched alkyl group having 1 to 6 carbon atoms, a cycloalkyl group having 3 to 6 carbon atoms, or a substituted or unsubstituted phenyl or benzyl group in which these substituted groups include at least one substituents described in the definition of the $R_1$ and $R_2$ groups as a substituent in a case that $R_1$ and $R_2$ in Formula (5) independently correspond to an aryl or heteroaryl group,

in a case in which A represents ($A_4$), n is an integer of 0 to 2, p is an integer of 0 to 4, and in a case in which A

represents ($A_2$), n is an integer of 0 to 2.

the polyisocyanate compound (A) is at least one kind selected from the group consisting of xylylene diisocyanate, bis(isocyanatomethyl) cyclohexane, and dicyclohexylmethane diisocyanate.

[a2] The polymerizable composition for optical materials according to [a1], in which the compound (B) is a compound represented by General Formula (I).

[a3] The polymerizable composition for optical materials according to any one of [a1] to [a2], in which the compound represented by General Formula (I) is polyethylene glycol or polypropylene glycol.

[a4] The polymerizable composition for optical materials according to any one of [a1] to [a3], in which the number average molecular weight of the compound represented by General Formula (I) is 200 to 4000.

[a5] The polymerizable composition for optical materials according to any one of [a1] to [a4], in which the number average molecular weight of the compound represented by General Formula (I) is 1000 to 3000.

[a6] A molded product comprised of a cured product of the polymerizable composition for optical materials according to any oneof [a1] to [a5].

[a7] An optical material comprised of the molded product according to [a6].

[a8] A plastic lens comprised of the molded product according to [a7] .

[a9] A process for producing a plastic lens, including a step of preparing a polymerizable composition for optical materials by mixing (A) at least one kind of di- or higher functional polyisocyanate compounds, (B) at least one kind of compounds selected from compounds represented by General Formula (I) or (III), (C) at least one kind of di- or higher functional active hydrogen compounds (here, the compound (B) is excluded), and (D) a photochromic compound, and a step of forming a lens substrate by cast-polymerizing the polymerizable composition for optical materials in a mold, wherein (a), (b), (c) and (d) are as defined in [a1].

**Claims**

**1.** A polymerizable composition for optical materials, comprising:

a polyisocyanate compound (A),
a polyol compound (B),
a di- or higher functional active hydrogen compound (C) and
a photochromic compound (D),
wherein the polyisocyanate compound (A) is at least one selected from the group consisting of hexamethylene diisocyanate, pentamethylene diisocyanate, xylylene diisocyanate, isophorone diisocyanate, bis(isocyanatomethyl)cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and diphenylmethane diisocyanate,
wherein the polyol compound (B) is at least one selected from compounds which have a number average molecular weight of 100 or more and which are represented by the following General Formulas (I) to (IV),

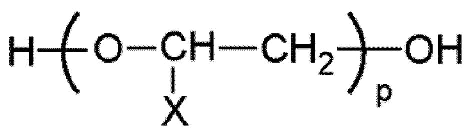

(I)

wherein, in Formula (I), p represents a numerical value of 4 to 100, X represents a hydrogen atom or a methyl group, and a plurality of X's may be the same as or different from each other,

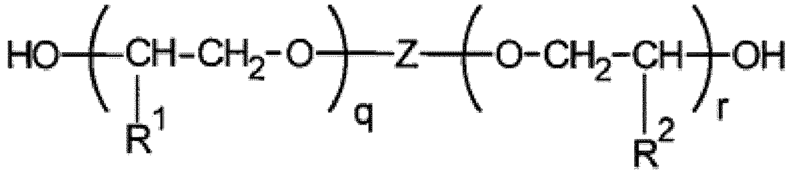

(II)

wherein, in Formula (II), q and r may be the same as or different from each other, each of q and r represents a numerical value of 1 or more, and the sum of q and r represents a numerical value of 2 to 100; $R^1$ and $R^2$ may be the same as or different from each other, each of $R^1$ and $R^2$ represents a hydrogen atom or a methyl group, and a plurality of $R^1$' s or $R^2$'s may be the same as or different from each other; and Z represents a substituted or unsubstituted divalent aromatic group or a divalent aliphatic group which optionally include a substituted or unsubstituted aromatic group having 1 to 20 carbon atoms,

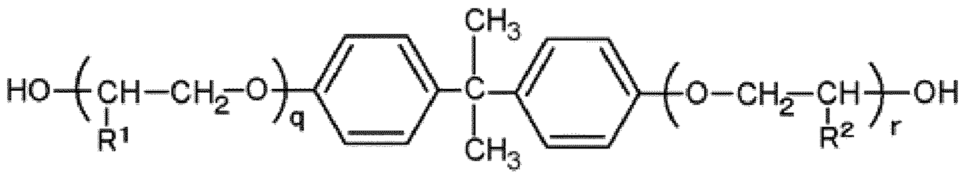

(III)

wherein, in Formula (III), q and r may be the same as or different from each other, each of q and r represents a numerical value of 1 or more, and the sum of q and r represents a numerical value of 2 to 100; and $R^1$ and $R^2$ may be the same as or different from each other, each of $R^1$ and $R^2$ represents a hydrogen atom or a methyl group, and a plurality of $R^1$' s or $R^2$'s may be the same as or different from each other,

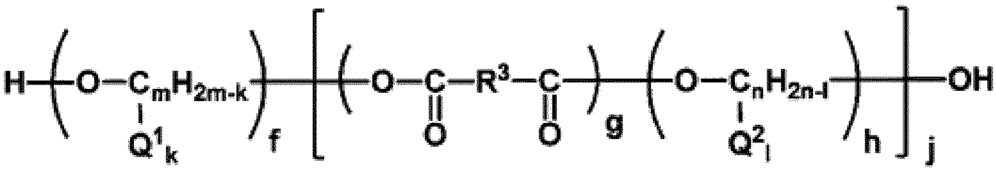

(IV)

wherein, in Formula (IV), m represents a numerical value of 1 to 20, k represents 0 to 2m, n represents a numerical value of 1 to 20, 1 represents 0 to 2n, f represents a numerical value of 0 or more, g represents a numerical value of 1 or more, h represents a numerical value of 1 or more, and j represents a numerical value of 1 or more; $Q^1$ represents a hydrogen atom or an alkyl group having 1 to 6 carbon atoms, and a plurality of $Q^1$'s may be the same as or different from each other; $Q^2$ represents a hydrogen atom or an alkyl group having 1 to 6 carbon atoms, and a plurality of $Q^2$'s may be the same as or different from each other; and $R^3$ represents a linear or branched alkylene group having 1 to 20 carbon atoms or a phenylene group which optionally have a linear or branched alkyl group having 1 to 10 carbon atoms as a substituent, and the plurality of $R^3$'s may be the same as or different from each other, and

wherein the active hydrogen compound (C) is at least one selected from the group consisting of glycerin, pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate); and wherein the photochromic compound (D) is represented by the following General Formula (5),

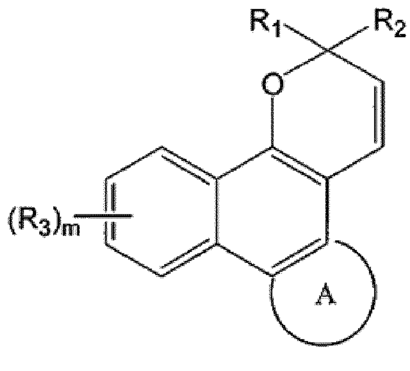

(5)

wherein in the formula, $R_1$ and $R_2$ may be identical or different, and independently represent
a hydrogen atom;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms in which these substituted groups , as a substituent, include at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms that is substituted by at least one halogen atom, a linear or branched haloalkoxy group having 1 to 12 carbon atoms that is substituted by at least one halogen atom, a phenoxy group or naphthoxy group substituted by at least one linear or branched alkyl group or alkoxy group having 1 to 12 carbon atoms, a linear or branched alkenyl group having 2 to 12 carbon atoms, a $-NH_2$ group, a -NHR group, a $-N(R)_2$ group in which R represents a linear or branched alkyl group having 1 to 6 carbon atoms, in which in a case that two Rs are present, the two Rs may be identical or different, a methacryloyl group and an acryloyl group; or
an aralkyl or heteroaralkyl group that a linear or branched alkyl group having 1 to 4 carbon atoms is substituted by the aryl group or the heteroaryl group,
$R_3$ may be identical or different, and independently represent
a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms that is substituted by at least one halogen atom, a halocycloalkyl group having 3 to 12 carbon atoms that is substituted by at least one halogen atom, a linear or branched haloalkoxy group having 1 to 12 carbon atoms that is substituted by at least one halogen atom;
a substituted or unsubstituted aryl group having 6 to 24 carbon atoms or a substituted or unsubstituted heteroaryl group having 4 to 24 carbon atoms in which these substituted groups , as a substituent, include at least one substituent selected from a halogen atom, a hydroxyl group, a linear or branched alkyl group having 1 to 12 carbon atoms, a linear or branched alkoxy group having 1 to 12 carbon atoms, a linear or branched haloalkyl group having 1 to 12 carbon atoms that is substituted by at least one halogen atom, a linear or branched haloalkoxy group having 1 to 12 carbon atoms that is substituted by at least one halogen atom, a phenoxy group or naphthoxy group substituted by at least one linear or branched alkyl group or alkoxy group having 1 to 12 carbon atoms, a linear or branched alkenyl group having 2 to 12 carbon atoms, and an amino group;
an aralkyl or heteroaralkyl group that a linear or branched alkyl group having 1 to 4 carbon atoms is substituted by the aryl group or heteroaryl group;
a substituted or unsubstituted phenoxy group or naphthoxy group, in which these substituted groups, as a substituent, include at least one substituent selected from a linear or branched alkyl group or alkoxy group having 1 to 6 carbon atoms;
$-NH_2$, -NHR, $-CONH_2$, or -CONHR in which R represents a linear or branched alkyl group having 1 to 6 carbon atoms; or
$-OCOR_8$ or $-COOR_8$ in which $R_8$ represents a linear or branched alkyl group having 1 to 6 carbon atoms, a cycloalkyl group having 3 to 6 carbon atoms, or a phenyl group substituted by at least one substituents of the substituted aryl and the substituted heteroaryl group of $R_1$ or $R_2$, or an unsubstituted phenyl group;
m is an integer of 0 to 4;
A represents an annelated ring represented by the following Formula ($A_2$) or ($A_4$), and

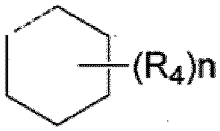

($A_2$)

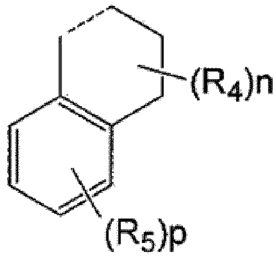

($A_4$)

wherein, in these annelated rings,
the dotted lines represent a chemical bond between a carbon $C_5$ and a carbon $C_6$ in a naphthopyran ring of a formula (5); an $\alpha$ bond in the annelated ring (A4) can be bonded with the carbon $C_5$ or the carbon $C_6$ in the naphthopyran ring of Formula (5);
$R_4$ is identical or different, and independently represents OH, a linear or branched alkyl group or alkoxy group having 1 to 6 carbon atoms; two $R_4$s form carbonyl (CO);
$R_s$ represents halogen atom;
a linear or branched alkyl group having 1 to 12 carbon atoms;
a linear or branched haloalkyl group having 1 to 6 carbon atoms that is substituted by at least one halogen atom;
a cycloalkyl group having 3 to 12 carbon atoms;
a linear or branched alkoxy group having 1 to 6 carbon atoms;
a substituted or unsubstituted phenyl or benzyl group in which these substituted groups include at least one substituents described in the definition of the $R_1$ and $R_2$ groups as a substituent in a case that $R_1$ and $R_2$ in Formula (5) independently correspond to an aryl or heteroaryl group;
$-NH_2$ or -NHR in which R represents a linear or branched alkyl group having 1 to 6 carbon atoms;
a substituted or unsubstituted phenoxy group or naphthoxy group in which these substituted groups, as a substituent, include at least one substituent selected from a linear or branched alkyl group or alkoxy group having 1 to 6 carbon atoms; or
a $-COR_9$, $-COOR_9$, or $-CONHR_9$ group in which $R_9$ represents a linear or branched alkyl group having 1 to 6 carbon atoms, a cycloalkyl group having 3 to 6 carbon atoms, or a substituted or unsubstituted phenyl or benzyl group in which these substituted groups include at least one substituents described in the definition of the $R_1$ and $R_2$ groups as a substituent in a case that $R_1$ and $R_2$ in Formula (5) independently correspond to an aryl or heteroaryl group,
in a case in which A represents ($A_4$), n is an integer of 0 to 2, p is an integer of 0 to 4, and in a case in which A represents ($A_2$), n is an integer of 0 to 2.

**2.** The polymerizable composition for optical materials according to Claim 1,
wherein the polyol compound (B) is the compound represented by General Formula (I), (III), or (IV).

**3.** The polymerizable composition for optical materials according to Claim 1 or 2,
wherein the compound represented by General Formula (I) is polyethylene glycol or polypropylene glycol.

**4.** The polymerizable composition for optical materials according to any one of Claims 1 to 3,
wherein the number average molecular weight of the compound represented by General Formula (I) is 200 to 4000.

**5.** The polymerizable composition for optical materials according to any one of Claims 1 to 3,
wherein the number average molecular weight of the compound represented by General Formula (I) is 300 to 3000.

**6.** The polymerizable composition for optical materials according to any one of claims 1 to 5,
wherein the number average molecular weight of the compound represented by General Formula (II) is 400 to 2000.

**7.** The polymerizable composition for optical materials according to any one of claims 1 to 6,
wherein the number average molecular weight of the compound represented by General Formula (III) is 400 to 2000.

**8.** The polymerizable composition for optical materials according to any one of claims 1 to 7,
wherein the number average molecular weight of the compound represented by General Formula (IV) is 600 to 3000.

**9.** The polymerizable composition for optical materials according to any one of Claims 1 to 8,

wherein the functional group equivalent ratio (B/A) of the polyol compound (B) to the polyisocyanate compound (A) is 0.02 to 0.6, and the functional group equivalent ratio (C/A) of the active hydrogen compound (C) to the polyisocyanate compound (A) is 0.4 to 0.98.

**10.** A molded product comprised of a cured product of the polymerizable composition for optical materials according to any one of Claims 1 to 9.

**11.** An optical material comprised of the molded product according to Claim 10.

**12.** A plastic lens comprised of the molded product according to Claim 10.

**13.** A process for producing a plastic lens of claim 12, comprising:

a step of preparing a polymerizable composition for optical materials by mixing a polyisocyanate compound (A), a polyol compound (B), a di- or higher functional active hydrogen compound (C), and a photochromic compound (D) and
a step of forming a lens substrate by cast-polymerizing the polymerizable composition for optical materials in a mold,
wherein the polyisocyanate compound (A), the polyol compound (B), the active hydrogen compound (C), and the photochromic compound (D) are as defined in claim 1.

## Patentansprüche

**1.** Polymerisierbare Zusammensetzung für optische Materialien, die Folgendes umfasst:

eine Polyisocyanatverbindung (A),
eine Polyolverbindung (B),
eine di- oder höherfunktionelle aktive Wasserstoffverbindung (C) und
eine photochrome Verbindung (D),
wobei die Polyisocyanatverbindung (A) zumindest eine aus der aus Hexamethylendiisocyanat, Pentamethylendiisocyanat, Xylylendiisocyanat, Isophorondiisocyanat, Bis(isocyanatomethyl)cyclohexan, Dicyclohexylmethandiisocyanat, 2,5-Bis(isocyanatomethyl)bicyclo-[2.2.1]-heptan, 2,6-Bis(isocyanatomethyl)bicyclo-[2.2.1]-heptan, Tolylendiisocyanat, Phenylendiisocyanat und Diphenylmethandiisocyanat bestehenden Gruppe ausgewählte ist,
wobei die Polyolverbindung (B) zumindest eine aus Verbindungen ausgewählte ist, die ein zahlenmittleres Molekulargewicht von 100 oder mehr aufweisen und die durch folgende allgemeine Formeln (I) bis (IV) dargestellt werden,

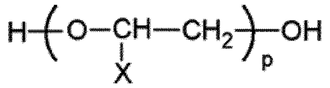
(I)

worin in Formel (I) p für einen numerischen Wert von 4 bis 100 steht, X für ein Wasserstoffatom oder eine Methylgruppe steht und eine Vielzahl von X gleich oder unterschiedlich sein können,

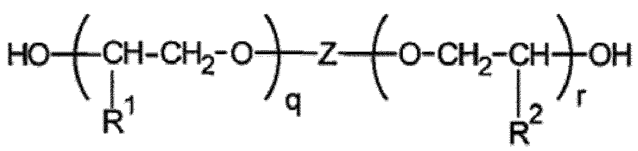
(II)

worin in Formel (II) q und r gleich oder unterschiedlich sein können, q und r jeweils für einen numerischen Wert von 1 oder mehr stehen und die Summe aus q und r einen numerischen Wert von 2 bis 100 ergibt; $R^1$ und $R^2$ gleich oder unterschiedlich sein können, die $R^1$ und $R^2$ jeweils für ein Wasserstoffatom oder eine Methylgruppe stehen und eine Vielzahl von $R^1$ oder $R^2$ gleich oder unterschiedlich sein können; und Z für eine substituierte oder unsubstituierte zweiwertige aromatische Gruppe oder eine zweiwertige aliphatische Gruppe steht, die

gegebenenfalls eine substituierte oder unsubstituierte aromatische Gruppe mit 1 bis 20 Kohlenstoffatomen umfassen,

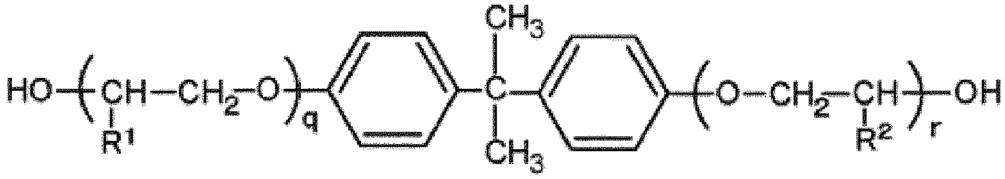

(III)

worin in Formel (III) q und r gleich oder unterschiedlich sein können, q und r jeweils für einen numerischen Wert von 1 oder mehr stehen und die Summe aus q und r einen numerischen Wert von 2 bis 100 ergibt; und $R^1$ und $R^2$ gleich oder unterschiedlich sein können, die $R^1$ und $R^2$ jeweils für ein Wasserstoffatom oder eine Methylgruppe stehen und eine Vielzahl von $R^1$ oder $R^2$ gleich oder unterschiedlich sein können,

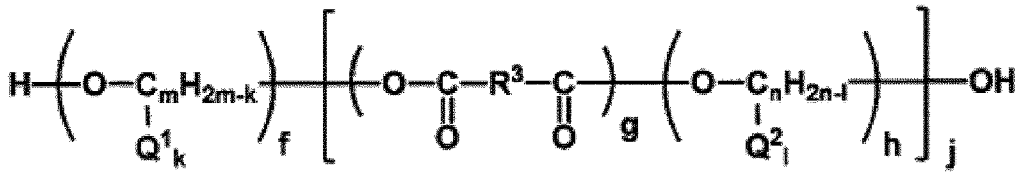

(IV)

worin in Formel (IV) m für einen numerischen Wert von 1 bis 20 steht, k für 0 bis 2m steht, n für einen numerischen Wert von 1 bis 20 steht, l für 0 bis 2n steht, f für einen numerischen Wert von 0 oder mehr steht, g für einen numerischen Wert von 1 oder mehr steht, h für einen numerischen Wert von 1 oder mehr steht und j für einen numerischen Wert von 1 oder mehr steht; $Q^1$ für ein Wasserstoffatom oder eine Alkylgruppe mit 1 bis 6 Kohlenstoffatomen steht und eine Vielzahl von $Q^1$ gleich oder unterschiedlich sein können; $Q^2$ für ein Wasserstoffatom oder eine Alkylgruppe mit 1 bis 6 Kohlenstoffatomen steht und eine Vielzahl von $Q^2$ gleich oder unterschiedlich sein können; und $R^3$ für eine unverzweigte oder verzweigte Alkylengruppe mit 1 bis 20 Kohlenstoffatomen oder eine Phenylengruppe steht, die gegebenenfalls eine unverzweigte oder verzweigte Alkylgruppe mit 1 bis 10 Kohlenstoffatomen als Substituent aufweisen, und die Vielzahl von $R^3$ gleich oder unterschiedlich sein können, und

wobei die aktive Wasserstoffverbindung (C) zumindest eine aus der aus Glycerin, Pentaerythrittetrakis(2-mercaptoacetat), Pentaerythrittetrakis(3-mercaptopropionat), 4-Mercaptomethyl-1,8-dimercapto-3,6-dithiaoctan, 5,7-Dimercaptomethyl-1, 11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-trithiaundecan, 1,1,3,3-Tetrakis(mercaptomethylthio)propan und Trimethylolpropantris(3-mercaptopropionat) bestehenden Gruppe ausgewählte ist; und wobei die photochrome Verbindung (D) von folgender allgemeiner Formel (5) dargestellt wird,

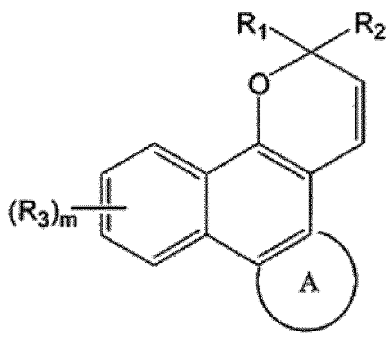

(5)

worin in der Formel $R_1$ und $R_2$ gleich oder unterschiedlich sein können und jeweils unabhängig für Folgendes stehen:

ein Wasserstoffatom;
eine unverzweigte oder verzweigte Alkylgruppe mit 1 bis 12 Kohlenstoffatomen;
eine Cycloalkylgruppe mit 3 bis 12 Kohlenstoffatomen;
eine substituierte oder unsubstituierte Arylgruppe mit 6 bis 24 Kohlenstoffatomen oder eine substituierte oder

unsubstituierte Heteroarylgruppe mit 4 bis 24 Kohlenstoffatomen, wobei diese substituierten Gruppen als Substituenten zumindest einen Substituenten umfassen, der aus Folgendem ausgewählt ist: einem Halogenatom, einer Hydroxylgruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, einer Phenoxygruppe oder Naphthoxygruppe, die mit zumindest einer unverzweigten oder verzweigten Alkylgruppe oder Alkoxygruppe mit 1 bis 12 Kohlenstoffatomen substituiert ist, einer unverzweigten oder verzweigten Alkenylgruppe mit 2 bis 12 Kohlenstoffatomen, einer -$NH_2$-Gruppe, einer -NHR-Gruppe, einer -$N(R)_2$-Gruppe, worin R für eine unverzweigte oder verzweigte Alkylgruppe mit 1 bis 6 Kohlenstoffatomen steht, wobei, wenn zwei R vorhanden sind, die zwei R gleich oder unterschiedlich sein können, einer Methacryloylgruppe und einer Acryloylgruppe; oder
eine Aralkyl- oder Heteroaralkylgruppe, die eine unverzweigte oder verzweigte Alkylgruppe mit 1 bis 4 Kohlenstoffatomen ist, die mit der Aryl- oder Heteroarylgruppe substituiert ist,
die $R^3$ gleich oder unterschiedlich sein können und unabhängig für Folgendes stehen:

ein Halogenatom;
eine unverzweigte oder verzweigte Alkylgruppe mit 1 bis 12 Kohlenstoffatomen;
eine Cycloalkylgruppe mit 3 bis 12 Kohlenstoffatomen;
eine unverzweigte oder verzweigte Alkoxygruppe mit 1 bis 12 Kohlenstoffatomen;
eine unverzweigte oder verzweigte Halogenalkylgruppe mit 1 bis 12 Kohlenstoffatomen, die mit zumindest einem Halogenatom substituiert ist, eine Halogencycloalkylgruppe mit 3 bis 12 Kohlenstoffatomen, die mit zumindest einem Halogenatom substituiert ist, eine unverzweigte oder verzweigte Halogenalkoxygruppe mit 1 bis 12 Kohlenstoffatomen, die mit zumindest einem Halogenatom substituiert ist;
eine substituierte oder unsubstituierte Arylgruppe mit 6 bis 24 Kohlenstoffatomen oder eine substituierte oder unsubstituierte Heteroarylgruppe mit 4 bis 24 Kohlenstoffatomen, wobei diese substituierten Gruppen als Substituenten zumindest einen Substituenten umfassen, der aus Folgendem ausgewählt ist: einem Halogenatom, einer Hydroxylgruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, einer Phenoxygruppe oder Naphthoxygruppe, die mit zumindest einer unverzweigten oder verzweigten Alkylgruppe oder Alkoxygruppe mit 1 bis 12 Kohlenstoffatomen substituiert ist, einer unverzweigten oder verzweigten Alkenylgruppe mit 2 bis 12 Kohlenstoffatomen und einer Aminogruppe;
eine Aralkyl- oder Heteroaralkylgruppe, die eine unverzweigte oder verzweigte Alkylgruppe mit 1 bis 4 Kohlenstoffatomen ist, die mit der Aryl- oder Heteroarylgruppe substituiert ist,
eine substituierte oder unsubstituierte Phenoxygruppe oder Naphthoxygruppe, wobei diese substituierten Gruppen als Substituenten zumindest einen Substituenten umfassen, der aus einer unverzweigten oder verzweigten Alkylgruppe oder einer Alkoxygruppe mit 1 bis 6 Kohlenstoffatomen ausgewählt ist;
-$NH_2$, -NHR, -$CONH_2$ oder -CONHR, worin R für eine unverzweigte oder verzweigte Alkylgruppe mit 1 bis 6 Kohlenstoffatomen steht; oder
-$OCOR_8$ oder -$COOR_8$, worin $R_8$ für eine unverzweigte oder verzweigte Alkylgruppe mit 1 bis 6 Kohlenstoffatomen, eine Cycloalkylgruppe mit 3 bis 6 Kohlenstoffatomen oder eine Phenylgruppe, die mit zumindest einem Substituenten der substituierten Aryl- und der substituierten Heteroarylgruppe von $R_1$ oder $R_2$ substituiert ist, oder eine unsubstituierte Phenylgruppe steht;
m eine ganze Zahl von 0 bis 4 ist;
A für einen anellierten Ring steht, der durch folgende Formel ($A_2$) oder ($A_4$) dargestellt wird, und

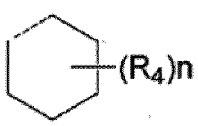

($A_2$)

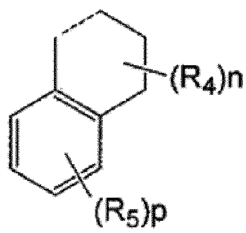

($A_4$)

worin in diesen anellierten Ringen

die gestrichelten Linien für eine chemische Bindung zwischen einem Kohlenstoff $C_5$ und einem Kohlenstoff $C_6$ in einem Naphthopyranring einer Formel (5) stehen; eine $\alpha$-Bindung im anellierten Ring (A4) an den Kohlenstoff $C_5$ oder den Kohlenstoff $C_6$ im Naphthopyranring der Formel (5) gebunden sein kann;
die $R_4$ unterschiedlich oder gleich sind und unabhängig für OH, eine unverzweigte oder verzweigte Alkylgruppe oder Alkoxygruppe mit 1 bis 6 Kohlenstoffatomen stehen; zwei $R_4$ Carbonyl (CO) bilden;
$R_5$ für Folgendes steht:

ein Halogenatom;
eine unverzweigte oder verzweigte Alkylgruppe mit 1 bis 12 Kohlenstoffatomen;
eine unverzweigte oder verzweigte Halogenalkylgruppe mit 1 bis 6 Kohlenstoffatomen, die mit zumindest einem Halogenatom substituiert ist;
eine Cycloalkylgruppe mit 3 bis 12 Kohlenstoffatomen;
eine unverzweigte oder verzweigte Alkoxygruppe mit 1 bis 6 Kohlenstoffatomen;
eine substituierte oder unsubstituierte Phenyl- oder Benzylgruppe, wobei diese substituierten Gruppen zumindest einen der in der Definition der $R_1$- und $R_2$-Gruppen als Substituenten beschriebenen Substituenten in dem Fall, dass $R_1$ und $R_2$ in Formel (5) unabhängig einer Aryl- oder Heteroarylgruppe entsprechen, umfassen;
-$NH_2$ oder -NHR, worin R für eine unverzweigte oder verzweigte Alkylgruppe mit 1 bis 6 Kohlenstoffatomen steht;
eine substituierte oder unsubstituierte Phenoxygruppe oder Naphthoxygruppe, wobei diese substituierten Gruppen zumindest einen Substituenten, der aus einer unverzweigten oder verzweigten Alkylgruppe oder Alkoxygruppe mit 1 bis 6 Kohlenstoffatomen ausgewählt ist, als Substituenten umfassen; oder
eine Gruppe -$COR_9$, -$COOR_9$ oder -$CONHR_9$, worin Rg für eine unverzweigte oder verzweigte Alkylgruppe mit 1 bis 6 Kohlenstoffatomen, eine Cycloalkylgruppe mit 3 bis 6 Kohlenstoffatomen oder eine substituierte oder unsubstituierte Phenyl- oder Benzylgruppe steht, wobei diese substituierten Gruppen zumindest einen der in der Definition der $R_1$- und $R_2$-Gruppen beschriebenen Substituenten in dem Fall, dass $R_1$ und $R_2$ in Formel (5) unabhängig einer Aryl- oder Heteroarylgruppe entsprechen, als Substituenten umfassen,
in dem Fall, dass A für ($A_4$) steht, n eine ganze Zahl von 0 bis 2 ist, p eine ganze Zahl von 0 bis 4 ist und in dem Fall, dass A für ($A_2$) steht, n eine ganze Zahl von 0 bis 2 ist.

**2.** Polymerisierbare Zusammensetzung für optische Materialien nach Anspruch 1, wobei die Polyolverbindung (B) die Verbindung ist, die von allgemeiner Formel (I), (III) oder (IV) dargestellt wird.

**3.** Polymerisierbare Zusammensetzung für optische Materialien nach Anspruch 1 oder 2, wobei die in allgemeiner Formel (I) dargestellte Verbindung Polyethylenglykol oder Polypropylenglykol ist.

**4.** Polymerisierbare Zusammensetzung für optische Materialien nach einem der Ansprüche 1 bis 3, wobei das zahlenmittlere Molekulargewicht der in allgemeiner Formel (I) dargestellten Verbindung 200 bis 4000 beträgt.

**5.** Polymerisierbare Zusammensetzung für optische Materialien nach einem der Ansprüche 1 bis 3, wobei das zahlenmittlere Molekulargewicht der in allgemeiner Formel (I) dargestellten Verbindung 300 bis 3000 beträgt.

**6.** Polymerisierbare Zusammensetzung für optische Materialien nach einem der Ansprüche 1 bis 5, wobei das zahlenmittlere Molekulargewicht der in allgemeiner Formel (II) dargestellten Verbindung 400 bis 2000 beträgt.

**7.** Polymerisierbare Zusammensetzung für optische Materialien nach einem der Ansprüche 1 bis 6, wobei das zahlenmittlere Molekulargewicht der in allgemeiner Formel (III) dargestellten Verbindung 400 bis 2000 beträgt.

**8.** Polymerisierbare Zusammensetzung für optische Materialien nach einem der Ansprüche 1 bis 7, wobei das zahlenmittlere Molekulargewicht der in allgemeiner Formel (IV) dargestellten Verbindung 600 bis 3000 beträgt.

**9.** Polymerisierbare Zusammensetzung für optische Materialien nach einem der Ansprüche 1 bis 8, wobei das Äquivalentenverhältnis der funktionellen Gruppen (B/A) von Polyolverbindung (B) zu Polyisocyanatverbindung (A) 0,02 bis 0,6 und das Äquivalentenverhältnis der funktionellen Gruppen (C/A) von aktiver Wasserstoffverbindung (C) zu Polyisocyanatverbindung (A) 0,4 bis 0,98 ist.

**10.** Formstück, das aus einem gehärteten Produkt einer polymerisierbaren Zusammensetzung für optische Materialien nach einem der Ansprüche 1 bis 9 besteht.

**11.** Optisches Material, das aus einem Formstück nach Anspruch 10 besteht.

**12.** Kunststofflinse, die aus einem Formstück nach Anspruch 10 besteht.

**13.** Verfahren zur Herstellung einer Kunststofflinse nach Anspruch 12, das Folgendes umfasst:

einen Schritt der Herstellung einer polymerisierbaren Zusammensetzung für optische Materialien durch das Mischen einer Polyisocyanatverbindung (A), einer Polyolverbindung (B), einer di- oder höherfunktionellen aktiven Wasserstoffverbindung (C) und einer photochromen Verbindung (D) und
einen Schritt des Formens eines Linsensubstrats durch das Gusspolymerisieren der polymerisierbaren Zusammensetzung für optische Materialien in einer Form,
wobei die Polyisocyanatverbindung (A), die Polyolverbindung (B), die aktive Wasserstoffverbindung (C) und die photochrome Verbindung (D) wie in Anspruch 1 definiert sind.

## Revendications

**1.** Composition polymérisable pour matériaux optiques, comprenant :

un composé de polyisocyanate (A),
un composé de polyol (B),
un composé d'hydrogène actif à fonction di- ou supérieure (C) et
un composé photochromique (D),
dans laquelle le composé de polyisocyanate (A) est au moins un composé choisi parmi le groupe constitué d'hexaméthylène diisocyanate, pentaméthylène diisocyanate, xylylène diisocyanate, isophorone diisocyanate, bis(isocyanatométhyl)cyclohexane, dicyclohexylméthane diisocyanate, 2,5-bis(isocyanatométhyl)bicyclo-[2.2.1]-heptane, 2,6-bis(isocyanatométhyl)bicyclo-[2.2.1]-heptane, tolylène diisocyanate, phénylène diisocyanate, et diphénylméthane diisocyanate,
dans laquelle le composé de polyol (B) est au moins un composé choisi parmi des composés qui ont un poids moléculaire moyen en nombre de 100 ou plus et qui sont représentés par les Formules Générales suivantes (I) à (IV),

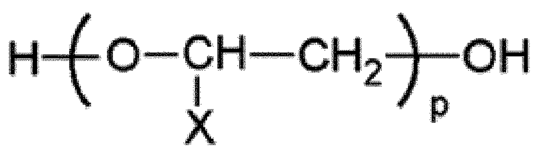

(I)

où, dans la formule (I), p représente une valeur numérique allant de 4 à 100, X représente un atome d'hydrogène ou un groupe méthyle, et une pluralité de X peuvent être identiques ou différents les uns des autres,

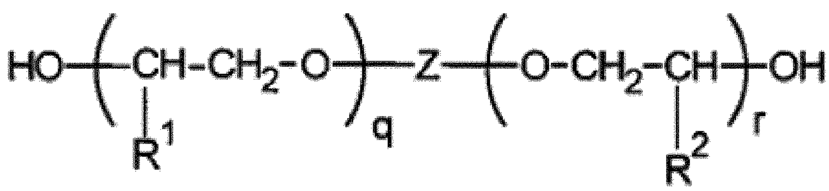

(II)

où, dans la formule (II), q et r peuvent être identiques ou différents l'un de l'autre, chacun des q et r représente une valeur numérique de 1 ou plus, et la somme de q et r représente une valeur numérique allant de 2 à 100 ; $R^1$ et $R^2$ peuvent être identiques ou différents l'un de l'autre, chacun des $R^1$ et $R^2$ représente un atome d'hydrogène ou un groupe méthyle, et une pluralité de $R^1$ ou $R^2$ peuvent être identiques ou différents les uns des autres ; et Z représente un groupe aromatique divalent substitué ou non substitué ou un groupe aliphatique divalent qui inclut facultativement un groupe aromatique substitué ou non substitué ayant 1 à 20 atomes de carbone,

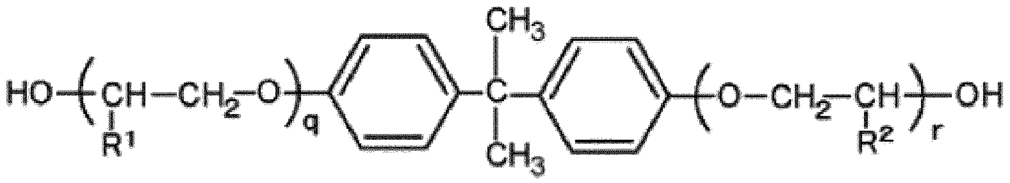

(III)

où, dans la formule (III), q et r peuvent être identiques ou différents l'un de l'autre, chacun des q et r représente une valeur numérique de 1 ou plus, et la somme de q et r représente une valeur numérique allant de 2 à 100 ; et $R^1$ et $R^2$ peuvent être identiques ou différents l'un de l'autre, chacun des $R^1$ et $R^2$ représente un atome d'hydrogène ou un groupe méthyle, et une pluralité de $R^1$ ou de $R^2$ peuvent être identiques ou différents les uns des autres,

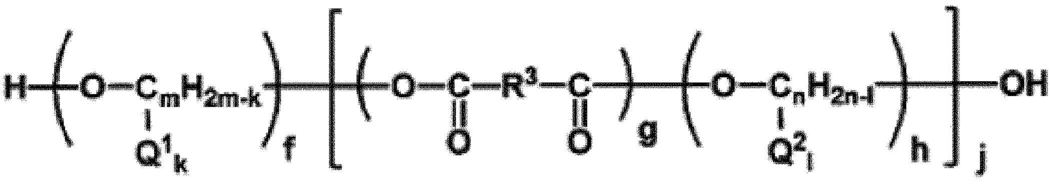

(IV)

où, dans la formule (IV), m représente une valeur numérique allant de 1 à 20, k représente 0 à 2m, n représente une valeur numérique allant de 1 à 20, l représente 0 à 2n, f représente une valeur numérique de 0 ou plus, g représente une valeur numérique de 1 ou plus, h représente une valeur numérique de 1 ou plus, et j représente une valeur numérique de 1 ou plus ; $Q^1$ représente un atome d'hydrogène ou un groupe alkyle ayant 1 à 6 atomes de carbone, et une pluralité de $Q^1$ peuvent être identiques ou différents les uns des autres ; $Q^2$ représente un atome d'hydrogène ou un groupe alkyle ayant 1 à 6 atomes de carbone, et une pluralité de $Q^2$ peuvent être identiques ou différents les uns des autres ; et $R^3$ représente un groupe alkylène linéaire ou ramifié ayant 1 à 20 atomes de carbone ou un groupe phénylène qui possède facultativement un groupe alkyle linéaire ou ramifié ayant 1 à 10 atomes de carbone en tant que substituant, et la pluralité de $R^3$ peuvent être identiques ou différents les uns des autres, et

dans laquelle le composé d'hydrogène actif (C) est au moins un composé choisi parmi le groupe constitué de glycérine, pentaérythritol tétrakis(2-mercaptoacétate), pentaérythritol tétrakis(3-mercaptopropionate), 4-mercaptométhyl-1,8-dimercapto-3,6-dithiaoctane, 5,7-dimercaptométhyl-1,11-dimercapto-3,6, 9-trithiaundécane, 4,7-dimercaptométhyl-1-1,11-dimercapto-3,6,9-trithiaundécane, 4,8-dimercaptométhyl-1,11-dimercapto-3,6,9-trithiaundécane, 1,1,3,3-tétrakis(mercaptométhylthio)propane, et triméthylolpropane tris(3-mercaptopropionate) ; et

dans laquelle le composé photochromique (D) est représenté par la Formule Générale suivante (5),

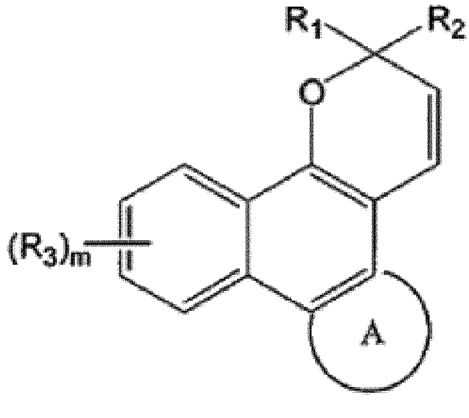

(5)

où, dans la formule, $R^1$ et $R^2$ peuvent être identiques ou différents, et représentent indépendamment

un atome d'hydrogène ;

un groupe alkyle linéaire ou ramifié ayant 1 à 12 atomes de carbone ;

un groupe cycloalkyle ayant 3 à 12 atomes de carbone ;

un groupe aryle substitué ou non substitué ayant 6 à 24 atomes de carbone ou un groupe hétéroaryle substitué

ou non substitué ayant 4 à 24 atomes de carbone dans lequel ces groupes substitués comprennent, en tant que substituant, au moins un substituant choisi parmi un atome d'halogène, un groupe hydroxyle, un groupe alkyle linéaire ou ramifié ayant 1 à 12 atomes de carbone, un groupe alcoxy linéaire ou ramifié ayant 1 à 12 atomes de carbone, un groupe haloalkyle linéaire ou ramifié ayant 1 à 12 atomes de carbone qui est substitué par au moins un atome d'halogène, un groupe haloalcoxy linéaire ou ramifié ayant 1 à 12 atomes de carbone qui est substitué par au moins un atome d'halogène, un groupe phénoxy ou un groupe naphthoxy substitué par au moins un groupe alkyle ou un groupe alcoxy linéaire ou ramifié ayant 1 à 12 atomes de carbone, un groupe alcényle linéaire ou ramifié ayant 2 à 12 atomes de carbone, un groupe $-NH_2$, un groupe -NHR, un groupe $-N(R)_2$ où R représente un groupe alkyle linéaire ou ramifié ayant 1 à 6 atomes de carbone, dans lequel, dans un cas où deux R sont présents, les deux R peuvent être identiques ou différents, un groupe méthacryloyle et un groupe acryloyle ; ou

un groupe aralkyle ou hétéroaralkyle dans lequel un groupe alkyle linéaire ou ramifié ayant de 1 à 4 atomes de carbone est substitué par le groupe aryle ou le groupe hétéroaryle,

$R_3$ peuvent être identiques ou différents, et représentent indépendamment

un atome d'halogène ;

un groupe alkyle linéaire ou ramifié ayant 1 à 12 atomes de carbone ;

un groupe cycloalkyle ayant 3 à 12 atomes de carbone ;

un groupe alcoxy linéaire ou ramifié ayant 1 à 12 atomes de carbone ;

un groupe haloalkyle linéaire ou ramifié ayant 1 à 12 atomes de carbone qui est substitué par au moins un atome d'halogène, un groupe halocycloalkyle ayant 3 à 12 atomes de carbone qui est substitué par au moins un atome d'halogène, un groupe haloalcoxy linéaire ou ramifié ayant 1 à 12 atomes de carbone qui est substitué par au moins un atome d'halogène ;

un groupe aryle substitué ou non substitué ayant 6 à 24 atomes de carbone ou un groupe hétéroaryle substitué ou non substitué ayant 4 à 24 atomes de carbone dans lequel ces groupes substitués comprennent, en tant que substituant, au moins un substituant choisi parmi un atome d'halogène, un groupe hydroxyle, un groupe alkyle linéaire ou ramifié ayant 1 à 12 atomes de carbone, un groupe alcoxy linéaire ou ramifié ayant 1 à 12 atomes de carbone, un groupe haloalkyle linéaire ou ramifié ayant 1 à 12 atomes de carbone qui est substitué par au moins un atome d'halogène, un groupe haloalcoxy linéaire ou ramifié ayant 1 à 12 atomes de carbone qui est substitué par au moins un atome d'halogène, un groupe phénoxy ou un groupe naphthoxy substitué par au moins un groupe alkyle ou un groupe alcoxy linéaire ou ramifié ayant 1 à 12 atomes de carbone, un groupe alcényle linéaire ou ramifié ayant 2 à 12 atomes de carbone, et un groupe amino ;

un groupe aralkyle ou hétéroaralkyle dans lequel un groupe alkyle linéaire ou ramifié ayant 1 à 4 atomes de carbone est substitué par le groupe aryle ou le groupe hétéroaryle ;

un groupe phénoxy ou groupe naphtoxy substitué ou non substitué, dans lequel ces groupes substitués comprennent, en tant que substituant, au moins un substituant choisi parmi un groupe alkyle ou un groupe alcoxy linéaire ou ramifié ayant 1 à 6 atomes de carbone ;

$-NH_2$, -NHR, $-CONH_2$, ou -CONHR où R représente un groupe alkyle linéaire ou ramifié ayant 1 à 6 atomes de carbone ; ou

$-OCOR_8$ ou $-COOR_8$ dans lequel $R_8$ représente un groupe alkyle linéaire ou ramifié ayant 1 à 6 atomes de carbone, un groupe cycloalkyle ayant 3 à 6 atomes de carbone, ou un groupe phényle substitué par au moins un des substituants du groupe aryle substitué et du groupe hétéroaryle substitué de $R_1$ ou $R_2$, ou un groupe phényle non substitué ;

m est un nombre entier allant de 0 à 4 ;

A représente un cycle circularisé représenté par la Formule suivante ($A_2$) ou ($A_4$), et

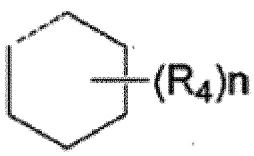

($A_2$)

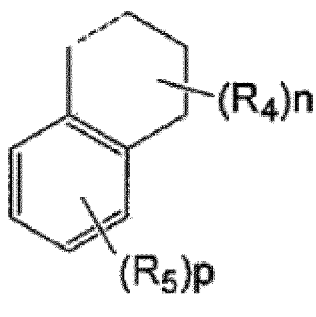

($A_4$)

où, dans ces anneaux circularisés,

les traits en pointillés représentent une liaison chimique entre un carbone $C_5$ et un carbone $C_6$ dans un cycle

naphtopyranne de formule (5) ; une liaison $\alpha$ dans le cycle circularisé (A4) peut être liée au carbone $C_5$ ou au carbone $C_6$ dans le cycle naphtopyranne de formule (5) ;
$R_4$ est identique ou différent, et représente indépendamment OH, un groupe alkyle ou un groupe alcoxy linéaire ou ramifié ayant 1 à 6 atomes de carbone ; deux $R_4$ forment un carbonyle (CO) ;
$R_5$ représente un atome d'halogène ;
un groupe alkyle linéaire ou ramifié ayant 1 à 12 atomes de carbone ;
un groupe haloalkyle linéaire ou ramifié ayant 1 à 6 atomes de carbone qui est substitué par au moins un atome d'halogène ;
un groupe cycloalkyle ayant 3 à 12 atomes de carbone ;
un groupe alcoxy linéaire ou ramifié ayant 1 à 6 atomes de carbone ;
un groupe phényle ou benzyle substitué ou non substitué dans lequel ces groupes substitués comprennent au moins un des substituants décrits dans la définition des groupes $R_1$ et $R_2$ en tant que substituant dans un cas où $R_1$ et $R_2$ dans la formule (5) correspondent indépendamment à un groupe aryle ou hétéroaryle ;
$-NH_2$ ou -NHR dans lequel R représente un groupe alkyle linéaire ou ramifié ayant 1 à 6 atomes de carbone ;
un groupe phénoxy ou un groupe naphthoxy substitué ou non substitué dans lequel ces groupes substitués comprennent, en tant que substituant, au moins un substituant choisi parmi un groupe alkyle ou un groupe alcoxy linéaire ou ramifié ayant 1 à 6 atomes de carbone ; ou
un groupe $-COR_9$, $-COOR_9$, ou $-CONHR_9$ dans lequel $R_9$ représente un groupe alkyle linéaire ou ramifié ayant 1 à 6 atomes de carbone, un groupe cycloalkyle ayant 3 à 6 atomes de carbone, ou un groupe phényle ou benzyle substitué ou non substitué dans lequel ces groupes substitués comprennent au moins un des substituants décrits dans la définition des groupes $R_1$ et $R_2$ en tant que substituant dans un cas où $R_1$ et $R_2$ dans la Formule (5) correspondent indépendamment à un groupe aryle ou hétéroaryle,
dans un cas où A représente ($A_4$), n est un nombre entier allant de 0 à 2, p est un nombre entier allant de 0 à 4, et dans un cas où A représente ($A_2$), n est un nombre entier allant de 0 à 2.

**2.** Composition polymérisable pour matériaux optiques selon la revendication 1,
dans laquelle le composé de polyol (B) est le composé représenté par la Formule Générale (I), (III), ou (IV).

**3.** Composition polymérisable pour matériaux optiques selon la revendication 1 ou 2,
dans laquelle le composé représenté par la Formule Générale (I) est un polyéthylène glycol ou un polypropylène glycol.

**4.** Composition polymérisable pour matériaux optiques selon l'une quelconque des revendications 1 à 3,
dans laquelle le poids moléculaire moyen en nombre du composé représenté par la Formule Générale (I) est compris entre 200 et 4 000.

**5.** Composition polymérisable pour matériaux optiques selon l'une quelconque des revendications 1 à 3,
dans laquelle le poids moléculaire moyen en nombre du composé représenté par la Formule Générale (I) est compris entre 300 et 3 000.

**6.** Composition polymérisable pour matériaux optiques selon l'une quelconque des revendications 1 à 5,
dans laquelle le poids moléculaire moyen en nombre du composé représenté par la Formule Générale (II) est compris entre 400 et 2 000.

**7.** Composition polymérisable pour matériaux optiques selon l'une quelconque des revendications 1 à 6,
dans laquelle le poids moléculaire moyen en nombre du composé représenté par la Formule Générale (III) est compris entre 400 et 2 000.

**8.** Composition polymérisable pour matériaux optiques selon l'une quelconque des revendications 1 à 7,
dans laquelle le poids moléculaire moyen en nombre du composé représenté par la Formule Générale (IV) est compris entre 600 et 3 000.

**9.** Composition polymérisable pour matériaux optiques selon l'une quelconque des revendications 1 à 8,
dans laquelle le rapport en équivalents de groupes fonctionnels (B/A) entre le composé de polyol (B) et le composé de polyisocyanate (A) est compris entre 0,02 et 0,6, et le rapport en équivalents de groupes fonctionnels (C/A) entre le composé d'hydrogène actif (C) et le composé de polyisocyanate (A) est compris entre 0,4 et 0,98.

**10.** Produit moulé constitué d'un produit durci ayant la composition polymérisable pour matériaux optiques selon l'une

quelconque des revendications 1 à 9.

**11.** Matériau optique constitué du produit moulé selon la revendication 10.

**12.** Lentille en matière plastique constituée du produit moulé selon la revendication 10.

**13.** Procédé de production d'une lentille en matière plastique selon la revendication 12, comprenant :

une étape de préparation d'une composition polymérisable pour matériaux optiques en mélangeant un composé de polyisocyanate (A), un composé de polyol (B), un composé d'hydrogène actif à fonction di- ou supérieure (C), et un composé photochromique (D) et
une étape de formation d'un substrat de lentille en polymérisant par coulée la composition polymérisable pour matériaux optiques dans un moule,
dans lequel le composé de polyisocyanate (A), le composé de polyol (B), le composé d'hydrogène actif (C), et le composé photochromique (D) sont tels que définis dans la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8272036 A
- JP 2005023238 A
- JP 2008030439 A
- JP 2011144181 A
- WO 2014002844 A
- US 6506538 B
- JP 2005305306 A
- WO 2005087829 A
- WO 2006109765 A
- WO 2007020817 A
- WO 2007020818 A
- US 2004096666 A1
- US 4889413 A
- US 2009099329 A1
- WO 9803890 A1
- US 2011043902 A1
- US 2003044620 A1
- US 2007142602 A1
- WO 201378086 A
- WO 2012149599 A
- WO 2010020770 A
- WO 2009146509 A
- JP 2004500319 PCT
- JP 2014018928 A